# EUROPEAN PATENT APPLICATION

(11) **EP 4 472 263 A1**
(43) Date of publication of application: **04.12.2024**
(21) Application number: 23743156.4
(22) Date of filing: 12.01.2023
(51) Int. Cl.: H04W 16/14, H04W 72/044, H04W 72/0453, H04W 84/12

(54) **WIRELESS COMMUNICATION CONTROL DEVICE AND METHOD, AND PROGRAM**

(30) Priority: 24.01.2022 JP 2022008443
(71) Applicant: Sony Group Corporation, Tokyo 108-0075 (JP)
(72) Inventor: SUGAYA Shigeru, Tokyo 108-0075 (JP)
(74) Representative: D Young & Co LLP
(86) International application number: PCT/JP2023/000518
(87) International publication number: WO 2023/140161

(57) **Abstract**

The present technology relates to a wireless communication control device, a method, and a program capable of reliably performing communication of a wireless communication system even in an environment in which another wireless communication system using the same frequency band as that of the wireless communication system and having a different signal format exists.

A wireless communication control device detects a narrow-band signal of a second wireless communication system in a frequency band in which a first wireless communication system operates, the narrow-band signal being a signal having a bandwidth narrower than the frequency band, the second wireless communication system being different from the first wireless communication system, and performs control to transmit a wireless signal of the first wireless communication system while avoiding a first band in which the narrow-band signal is detected. The present technology can be applied to a wireless communication system.

## Description

### TECHNICAL FIELD

The present technology relates to a wireless communication control device, a method, and a program, and more particularly, to a wireless communication control device, a method, and a program capable of reliably performing communication of a wireless communication system even in an environment in which another wireless communication system using the same frequency band as that of the wireless communication system and having a different signal format exists.

### BACKGROUND ART

Since a wireless LAN system can easily use highspeed and large-capacity communication and uses a frequency band that is internationally recognized for use, the wireless LAN system is widely used all over the world today.

Meanwhile, as a wireless communication system using the same frequency band as that of the wireless LAN system, there is an FH communication system using a frequency hopping (FH) technology such as Bluetooth (registered trademark) low energy (LE).

In order for these two wireless communication systems to use the same 2.4 GHz band referred to as the ISM band, it has been necessary to eliminate interference between different wireless communication systems in the same frequency band, and to construct a mechanism in which both wireless communication systems coexist.

Therefore, the IEEE 802 Technical Committee has conducted a technical study for coexistence of both wireless communication systems, the Bluetooth technology is defined in the IEEE 802.15.1 standard, and the IEEE 802.15.2 standard that coexists with the Bluetooth technology has been formulated. That is, in the IEEE 802.15.2 standard, a technology of limiting a channel that performs FH in a case where another wireless communication system such as a wireless LAN system is detected is defined.

At present, in a wireless LAN system, it is possible to newly use a frequency band of a 6 GHz band, and a concern about exhaustion of frequency resources is being eliminated for the time being.

However, in other wireless communication systems, there is a movement to use a frequency band of the 6 GHz band. For example, in Bluetooth, use of these frequency bands has been studied.

Patent Literature 1 discloses a wireless communication device including a wireless communication unit that detects an interference wave of wireless communication in a bandwidth of a frequency channel and acquires a frequency channel of the interference wave, and an allocation control unit that allocates a channel used for communication to a frequency channel other than the frequency channel set by a channel aggregation unit, and a communication method thereof.

In an FH communication system such as Bluetooth LE, transmission is continued even if a signal of a wireless LAN system is detected in order to perform communication by switching frequencies. Therefore, in this FH communication system, the probability that the communication of the FH technology succeeds increases, but the probability that the communication of the wireless LAN system fails increases.

In particular, in the FH communication system, since a narrow-band signal is transmitted as a single shot in time, it is difficult to observe a carrier wave and detect that a transmission path is used as in a wireless LAN system or the like.

As described above, the IEEE 802.15.2 standard is standardized to prevent interference, but a Bluetooth system using Bluetooth is to operate only in a case where a wireless LAN system exists in advance. Therefore, this standard is practically used only in a case where the wireless LAN system continuously performs data transmission. That is, a signal that gives interference is transmitted from the Bluetooth system for the data transmission of the wireless LAN system to be started during the transmission of the Bluetooth system.

Note that Bluetooth is a standard in which a signal format is changed according to the Low Energy standard, and an advertisement channel is arranged in a gap between channels used in the wireless LAN system and the like, for example, to enhance resistance. However, since the data channel is transmitted at the frequency used by the wireless LAN system, it can be said that the interference with the wireless LAN system is not resolved.

Furthermore, in the frequency band to be newly used, the originally assumed throughput may not be realized due to the presence of other wireless communication systems. That is, even if the use is distributed by fair access control in the wireless LAN system, there is a possibility that the communication itself in the wireless LAN system is not established due to interference of signals from other wireless communication systems.

From the above, currently, as a method of substantially coexisting with the FH communication system, there is only a method of adding a circuit for determining whether or not an existing FH communication system is operating and using a frequency channel avoiding the interference in a wireless LAN system to be added later.

### CITATION LIST

### PATENT DOCUMENT

Patent Document 1: WO 2020/201679

### SUMMARY OF THE INVENTION

### PROBLEMS TO BE SOLVED BY THE INVENTION

As described above, there is an urgent need for a method capable of reliably performing communication of a wireless LAN system in an environment in which there is another wireless communication system having a different signal format using the same frequency band as that of the wireless LAN system.

The present technology has been made in view of such a situation, and makes it possible to reliably perform communication of a wireless communication system even in an environment in which there is another wireless communication systems having a different signal format using the same frequency band as that of the wireless communication system.

### SOLUTIONS TO PROBLEMS

A wireless communication device according to one aspect of the present technology includes: a detection unit that detects a narrow-band signal of a second wireless communication system in a frequency band in which a first wireless communication system operates, the narrow-band signal being a signal having a bandwidth narrower than the frequency band, the second wireless communication system being different from the first wireless communication system; and a communication control unit that performs control to transmit a wireless signal of the first wireless communication system while avoiding a first band in which the narrow-band signal is detected.

In one aspect of the present technology, a narrow-band signal of a second wireless communication system is detected in a frequency band in which a first wireless communication system operates, the narrow-band signal being a signal having a bandwidth narrower than the frequency band, the second wireless communication system being different from the first wireless communication system, and control is performed to transmit a wireless signal of the first wireless communication system while avoiding a first band in which the narrow-band signal is detected.

### BRIEF DESCRIPTION OF DRAWINGS

Fig. 1 is a diagram illustrating a configuration example of a wireless LAN system according to an embodiment of the present technology.
Fig. 2 is a diagram illustrating an example of a frequency band and channel allocation used in a wireless LAN system.
Fig. 3 is a diagram illustrating an operation frequency channel of an FH communication system.
Fig. 4 is a diagram illustrating a usage mode of a channel in the FH communication system.
Fig. 5 is a block diagram illustrating a configuration example of a wireless communication device.
Fig. 6 is a block diagram illustrating a configuration example of a wireless communication module in Fig. 5.
Fig. 7 is a diagram illustrating a configuration example of a frequency resource unit in a wireless LAN system.
Fig. 8 is a diagram illustrating a configuration example of a frequency channel of an FH communication system in a frequency band of 20 MHz.
Fig. 9 is a diagram illustrating a first coexistence method of the wireless LAN system and the FH communication system according to the present technology.
Fig. 10 is a diagram illustrating a second coexistence method of the wireless LAN system and the FH communication system according to the present technology.
Fig. 11 is a diagram illustrating a third coexistence method of the wireless LAN system and the FH communication system according to the present technology.
Fig. 12 is a diagram illustrating a fourth coexistence method of the wireless LAN system and the FH communication system according to the present technology.
Fig. 13 is a diagram illustrating a fifth coexistence method of the wireless LAN system and the FH communication system according to the present technology.
Fig. 14 is a diagram illustrating a sixth coexistence method of the wireless LAN system and the FH communication system according to the present technology.
Fig. 15 is a diagram illustrating a first sequence of information acquisition necessary for coexistence of the wireless LAN system and the FH communication system of the present technology.
Fig. 16 is a diagram illustrating a second sequence of information acquisition necessary for coexistence of the wireless LAN system and the FH communication system of the present technology.
Fig. 17 is a diagram illustrating a sequence of data transmission of the present technology.
Fig. 18 is a diagram illustrating a configuration example of an FH System Detection Request frame according to the present technology.
Fig. 19 is a diagram illustrating a configuration example of an FH System Detection Report frame according to the present technology.
Fig. 20 is a flowchart illustrating status grasping processing of the frequency resource unit of an AP.
Fig. 21 is a flowchart illustrating frequency resource unit setting processing in step S20 in Fig. 20.
Fig. 22 is a flowchart illustrating measurement processing of a usage status of a frequency resource unit of an STA.
Fig. 23 is a flowchart illustrating setting processing of a frequency resource unit of DL OFDMA communication of the AP.
Fig. 24 is a flowchart illustrating setting processing of a frequency resource unit of UL OFDMA communication of the STA.
Fig. 25 is a flowchart illustrating setting processing of a frequency resource unit of an Inter FH communication system.
Fig. 26 is a block diagram illustrating a configuration example of a computer.
Fig. 27 is a block diagram illustrating a schematic configuration example of a smartphone to which the present technology is applied.
Fig. 28 is a block diagram illustrating a schematic configuration example of an in-vehicle device to which the present technology is applied.
Fig. 29 is a block diagram illustrating a schematic configuration example of a wireless AP to which the present technology is applied.

### MODE FOR CARRYING OUT THE INVENTION

Hereinafter, modes for carrying out the present technology will be described. The description will be given in the following order.
1. Wireless LAN System
2. Configuration of Wireless Communication Device
3. Usage Example of Frequency Band with Bandwidth of 20 MHz
4. Operation of Wireless LAN System
5. Frame Configuration
6. Operation of Wireless Communication Device
7. Modification
8. Others

### <<1. Wireless LAN System>>

### <Configuration of Wireless LAN System>

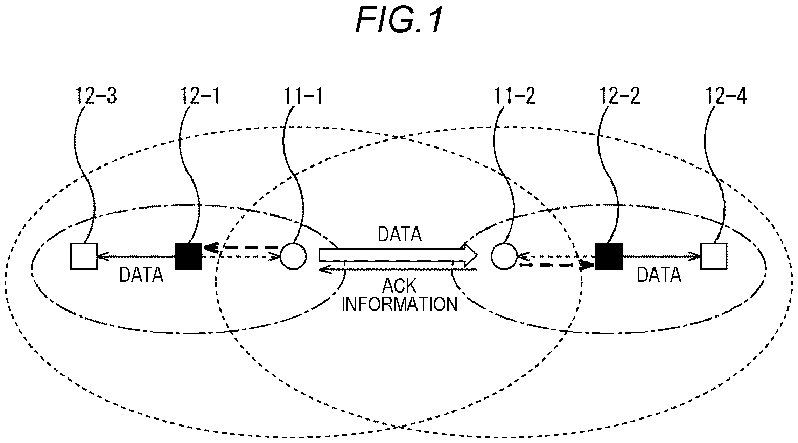

Fig. 1 is a diagram illustrating a configuration example of a wireless LAN system that is a wireless communication system according to an embodiment of the present technology.

The wireless LAN system in Fig. 1 includes wireless communication devices 11-1 and 11-2. The wireless communication devices 11-1 and 11-2 are devices operating as an access point (AP) or a user terminal (STA), and include a smartphone, a mobile phone, a mobile terminal, a personal computer, a communication device, and the like. Note that, hereinafter, the wireless communication devices 11-1 and 11-2 will be referred to as wireless communication devices 11 unless it is particularly necessary to distinguish them.

The wireless communication device 11-1 transmits data to the wireless communication device 11-2, and receives Acknowledgement (ACK) information, which is a data reception acknowledgement response transmitted from the wireless communication device 11-2.

The wireless communication device 11-2 receives the data transmitted from the wireless communication device 11-1 and transmits the ACK information to the wireless communication device 11-1.

In Fig. 1, a frequency hopping (FH) communication system that performs communication in an FH scheme exists in the vicinity of the wireless LAN system.

The FH communication system includes FH communication devices 12-1 to 12-4. The FH communication devices 12-1 to 12-4 include devices that perform communication in the FH scheme represented by a smartphone, a mobile phone, a mobile terminal, a personal computer, a mouse, a headphone, an earphone, a speaker, and the like. Note that, hereinafter, the FH communication devices 12-1 to 12-4 will be referred to as FH communication devices 12 unless it is particularly necessary to distinguish them.

In Fig. 1, when data is transmitted from the wireless communication device 11-1 to the wireless communication device 11-2, the FH communication device 12-1 exists in the vicinity of the wireless communication device 11-1, and the FH communication device 12-2 exists in the vicinity of the wireless communication device 11-2.

Meanwhile, the FH communication device 12-1 transmits data to the paired FH communication device 12-3 by the FH scheme. The FH communication device 12-2 transmits data to the paired FH communication device 12-4 by the FH scheme.

Since the transmission power is suppressed, these signals of FH communication are generally used for the purpose of performing near field communication.

In Fig. 1, an ellipse centered on a mark representing the wireless communication device 11-1, the wireless communication device 11-2, the FH communication device 12-1, and the FH communication device 12-2 represents a transmission range of a transmission radio wave of each of the wireless communication device 11-1, the wireless communication device 11-2, the FH communication device 12-1, and the FH communication device 12-2. Therefore, the intersection of these ellipses schematically represents that interference is given to each of the ellipses when each communication is simultaneously executed.

Furthermore, a broken line arrow from the FH communication device 12-1 to the wireless communication device 11-1 indicates that a signal transmitted from the FH communication device 12-1 reaches the wireless communication device 11-1. Similarly, a broken line arrow from the FH communication device 12-2 to the wireless communication device 11-2 indicates that a signal transmitted from the FH communication device 12-2 reaches the wireless communication device 11-2.

On the other hand, in a case where data transmission is performed by continuously using a predetermined frequency band as in a wireless LAN system, a wireless signal of the data transmission may become noise and reach the FH communication device 12.

That is, a broken line arrow from the wireless communication device 11-1 to the FH communication device 12-1 indicates that data (wireless signal) transmitted from the wireless communication device 11-1 reaches the FH communication device 12-1. Similarly, a broken line arrow from the wireless communication device 11-2 to the FH communication device 12-2 indicates that the ACK information (wireless signal) transmitted from the wireless communication device 11-2 reaches the FH communication device 12-2.

Therefore, in the case of Fig. 1, the data transmitted from the wireless communication device 11-1 interferes with the communication of the FH communication device 12-1, and the ACK information transmitted from the wireless communication device 11-2 interferes with the communication of the FH communication device 12-2.

### <Frequency Band and Channel Allocation of Wireless LAN System>

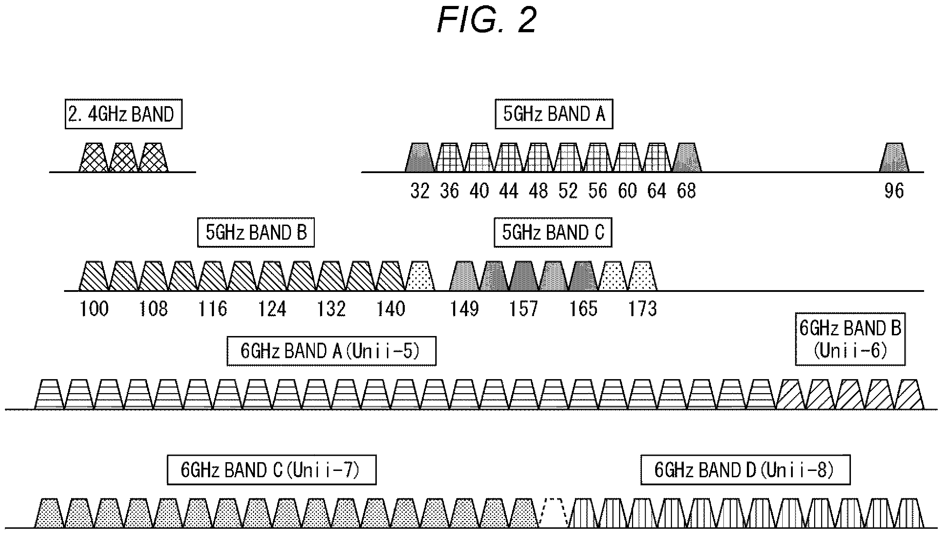

Fig. 2 is a diagram illustrating an example of a frequency band and channel allocation used in a wireless LAN system.

Fig. 2 illustrates available frequency bands and channel allocation statuses thereof for the wireless LAN system.

First, in a case where the 2.4 GHz band is applied to a wireless signal of an orthogonal frequency division multiplexing (OFDM) scheme of a 20 MHz bandwidth of the IEEE 802.11g standard, a frequency channel of at least about three channels can be set in the 2.4 GHz band.

Furthermore, in the 5 GHz band, a plurality of channels to be applied to a wireless signal of the OFDM scheme with the 20 MHz bandwidth can be secured for the IEEE 802.11a standard, and the like.

However, the operation in the 5 GHz band is provided with conditions for determining an available frequency range, transmission power, and transmittable according to the legal system of each country.

In Fig. 2, channel numbers are assigned under the 5 GHz band, and in Japan, eight channels of channels 36 to 64 and 11 channels of channels 100 to 140 can be used.

Note that the channel 32, the channel 68, the channel 96, and the channel 144 can also be used in other countries and regions, and the channels 149 to 173 can be used in a frequency band thereabove.

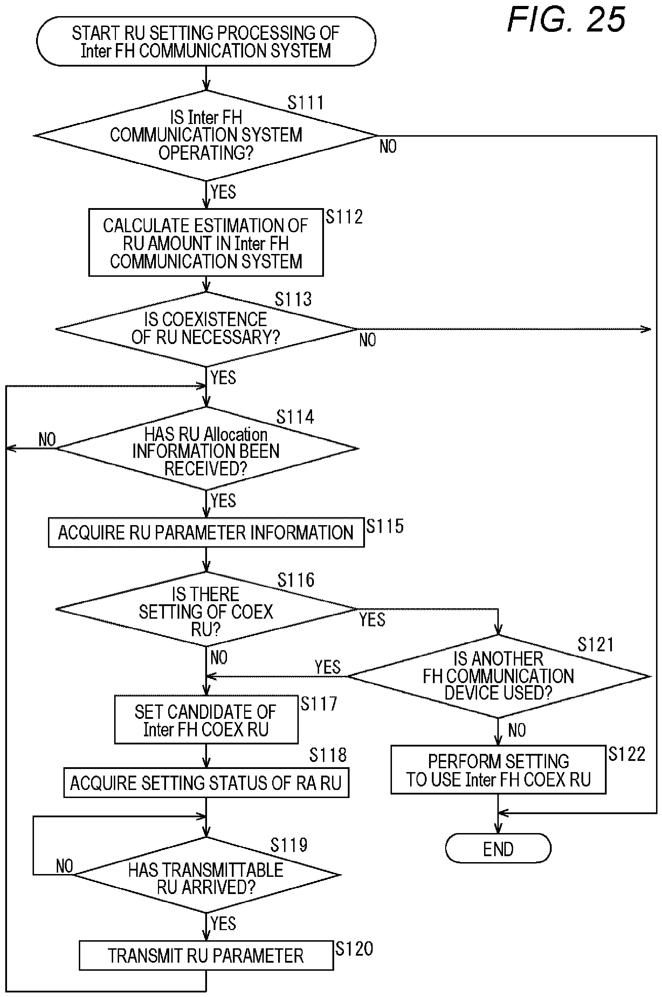

In the 6 GHz band that is currently being standardized so as to be usable, as illustrated in Fig. 2, 25 channels in the UNII-5 band in the 6 GHz band A, five channels in the UNII-6 band in the 6 GHz band B, 17 channels in the UNII-7 band in the 6 GHz band C, and 12 channels in the UNII-8 band in the 6 GHz band D can be arranged.

Note that a plurality of bandwidths of 20 MHz can be used in these frequency bands. For example, a frequency band of a continuous bandwidth of 40 MHz can be used by combining the two frequency bands. Furthermore, a frequency band of a continuous bandwidth of 80 MHz can be used by combining the four frequency bands, and a frequency band of a continuous bandwidth of 160 MHz can be used by combining the eight frequency bands.

### <Operation Frequency Channel of FH Communication System>

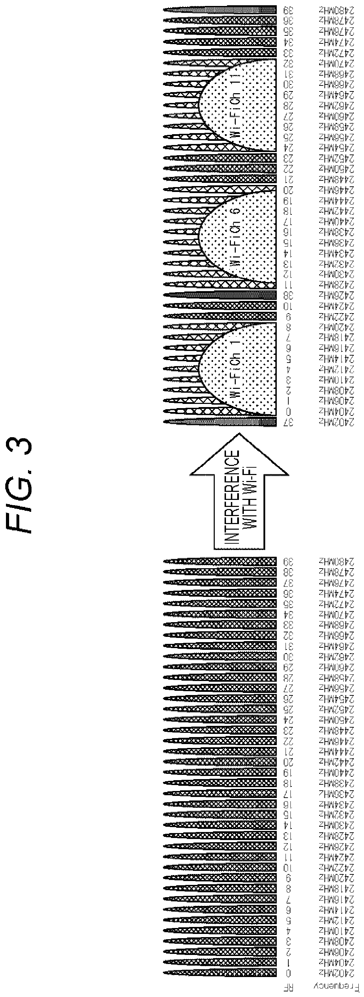

Fig. 3 is a diagram illustrating an operation frequency channel of the FH communication system.

Fig. 3 illustrates channel numbers (RF0 to RF39) corresponding to the respective RFs and frequencies (2402 MHz to 2480 MHz) corresponding to the respective RFs.

On the left side of Fig. 3, 40 channels for performing communication in the FH scheme using all of the 2.4 GHz band are prepared.

In this FH communication system, three channels (for example, RF37 to RF39) out of the 40 channels are set as advertisement channels, and control information other than data communication is exchanged.

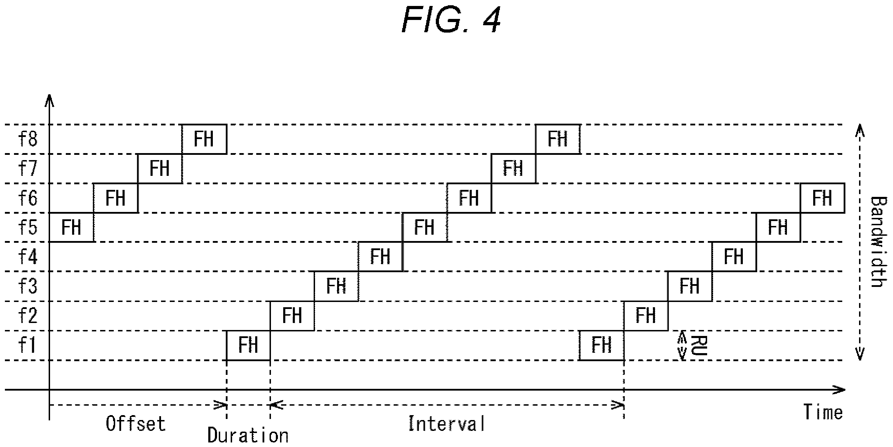

Note that, in the FH communication system, signals are not always continuously transmitted in these channels as in the wireless LAN system, but as will be described later with reference to Fig. 4, the FH communication system is configured to operate by switching frequency channels while using one channel at a short interval.

Here, a mechanism in which both the wireless LAN system and the FH communication system coexist is standardized in IEEE 802.15.2, and a part thereof is defined as adaptive frequency hopping (AFH).

The AFH sets a channel used for frequency hopping while avoiding a frequency channel used in a wireless LAN system or the like in advance.

The right side of Fig. 3 illustrates a state in which the FH communication system uses a frequency channel not used in the wireless LAN system by the AFH.

On the right side of Fig. 3, Wi-Fi ch1 (RF0 to RF8), Wi-Fi ch6 (RF11 to RF20), and Wi-Fi ch11 (RF24 to RF32) compliant with the IEEE 802.11b standard are illustrated as frequency channels used in the wireless LAN system.

Therefore, among the 40 channels, the FH communication system uses 12 channels of RF9, RF10, RF21 to RF23, and RF33 to RF36 in addition to RF37 to RF39 set as the advertisement channels.

Note that, as described above, the AFH is a mechanism in a case where the frequency channel used in the wireless LAN system is known.

Therefore, in a case where communication by the wireless LAN system is not performed and only communication by the FH communication system is performed, the FH communication system performs communication using the 40 channels as illustrated on the left side of Fig. 3.

### <Channel Usage Mode in FH Communication System>

Fig. 4 is a diagram illustrating a channel usage mode in the FH communication system.

In Fig. 4, the vertical axis represents the frequency channel, and the horizontal axis represents the transition of time. Note that, in Fig. 4, the frequency resource unit of the FH communication system is denoted as an RU. The same applies to the following diagrams.

Furthermore, for convenience of description, in Fig. 4, eight narrow-band channels are illustrated as the frequency resource units of the FH communication system, but actually, a frequency shift is performed on each of 40 channels and transmission is performed. As described above, a signal of the FH communication system is a narrow-band signal having a narrow bandwidth at each timing.

That is, the FH signal is transmitted at the frequency f5 at any timing (first time), the FH signal is transmitted at the frequency f6 at the next timing (second time), and the FH signal is transmitted at the frequency f7 at the next timing.

Then, after the FH signal is transmitted at the frequency f8, the FH signal is transmitted at the frequency f1.

By such a frequency shift, in a case where the lowest frequency f1 in the frequency band is used as a reference as a parameter in the time axis direction, the timing from the start of detection of the FH signal until the FH signal of the frequency f1 is detected is set as an Offset, the period until the frequency returns to the frequency f1 again is set as an Interval, and the time during which the FH signal is continuously detected is set as a Duration.

Moreover, as a parameter in the frequency direction, a bandwidth in which FH is continuously performed as the frequency resource unit of the FH communication system is a Bandwidth for detecting the FH signal.

These parameters are parameters obtained as a result of detecting the FH signal and measuring the detected FH signal for a predetermined time in the wireless communication device 11 of the wireless LAN system of the present technology. Hereinafter, these parameters are referred to as measurement parameters.

Here, the IEEE 802.15.2 standard described above with reference to Fig. 3 is standardized to prevent interference, but Bluetooth or the like, which is an FH communication system, operates according to this standard only in a case where a wireless LAN system exists in advance.

Therefore, this standard is practically used only in a case where the wireless LAN system continuously performs data transmission. That is, a signal that gives interference is transmitted from Bluetooth for the data transmission of the wireless LAN system, the data transmission being started during Bluetooth communication.

Note that Bluetooth is a standard in which a signal format is changed according to the Low Energy standard, and an advertisement channel is arranged in a gap between channels used in the wireless LAN system and the like, for example, to enhance resistance. However, since the data channel is transmitted in the frequency band used by the wireless LAN system, it can be said that the interference with the wireless LAN system is not resolved.

Furthermore, in the frequency band to be newly used, the originally assumed throughput may not be realized due to the presence of other wireless communication systems. That is, even if the use is distributed by fair access control in the wireless LAN system, there is a possibility that the communication itself in the wireless LAN system is not established due to interference of signals from other wireless communication systems.

From the above, currently, in order to substantially coexist with the FH communication system, a method of adding a circuit for determining whether or not an existing FH communication system is operating and using a frequency channel avoiding the interference in a wireless LAN system to be added later, or the like can be considered.

However, for example, in a case where the FH communication system transmits a signal (hereinafter, referred to as a narrow-band signal) in a frequency band of a narrow bandwidth in a frequency band of 20 MHz in which the wireless LAN system operates, there has been a possibility that interference is given to the FH communication system in the wireless LAN system.

Furthermore, in the wireless LAN system, conversely, there has been a possibility that data transmission and reception is hindered due to interference of a narrow-band signal transmitted from the FH communication system.

In the technique described in Patent Literature 1, since the presence or absence of interference in each channel in a frequency channel is grasped, it is difficult to detect a narrow-band signal (for example, a signal of the FH communication system) having a bandwidth narrower than that of the frequency channel, and it is difficult to perform communication while preventing interference of these narrow-band signals.

Therefore, even in an environment in which there are wireless communication systems using different frequency bands, it is necessary to establish a technique capable of detecting a narrow-band signal having a bandwidth narrower than the frequency channel and reliably performing communication in the wireless LAN system.

In particular, in a case where a continuous frequency band is used, it has been required to establish a technique for coexisting with an FH signal that is a narrow-band signal having a narrow frequency band to be used.

Therefore, in the present technology, in a frequency band operating as a wireless LAN system (first wireless communication system), a narrow-band signal of an FH communication system (second wireless communication system) that is a signal having a bandwidth narrower than the frequency band and different from the wireless LAN system is detected, and control is performed to transmit the wireless signal of the first wireless communication system while avoiding the first band in which the narrow-band signal is detected.

As a result, even in an environment in which other wireless communication systems having different signal formats exist, the communication of the wireless LAN system can be reliably performed using the same frequency band such as the FH scheme.

Furthermore, the first band is one of a plurality of frequency resource units included in the frequency band, and among the frequency resource units, a narrow-band signal is detected by setting at least one frequency resource unit including a band overlapping a band (channel) of the narrow-band signal as a detection target. That is, among the frequency resource units, at least one frequency resource unit that also partially overlaps the band (channel) of the narrow-band signal is used for the detection of the narrow-band signal. The frequency resource unit is a resource unit for frequency among the resource units in a wireless LAN system to be described later, and represents a band narrower than the above-described frequency band.

Since the narrow-band signal is detected by using the frequency resource unit as a detection target, the frequency band can be managed for each frequency resource unit. As a result, the communication of the wireless LAN system can be performed more reliably.

Here, the narrow-band signal is defined as follows in a wireless LAN system such as Wi-Fi.
- A signal having a bandwidth narrower than 20 MHz, which is a reference channel width of the IEEE 802.11a, b, g, and ac standards
- A signal (for example, a signal in a bandwidth unit of 2 MHz or 1 MHz defined in the IEEE 802.11ah standard) having a width including a subcarrier corresponding to a resource unit when the minimum channel width (for example, 20 MHz) of the IEEE 802.11ax standard is set
- A signal having a bandwidth narrower than the frequency interval of the two guard bands set for channel separation
- A signal having a bandwidth narrower than the frequency interval of Null subcarrier defined by the signal of the OFDM scheme

Note that the resource unit is a unit name of a communication resource individually available in a channel as a broad definition (general definition), and is also referred to as a sub-channel. However, the resource unit as a narrow definition is described in "IEEE Standard for Information TechnologyTelecommunications and Information Exchange between Systems Local and Metropolitan Area Networks--Specific Requirements Part 11: Wireless LAN Medium Access Control (MAC) and Physical Layer (PHY) Specifications Amendment 1: Enhancements for High-Efficiency WLAN," in IEEE Std 802.11ax-2021 (Amendment to IEEE Std 802.11-2020), [3.2 Definitions specific to IEEE 802.11], [27.3.2.2 Resource unit, guard, and DC subcarriers], 19 May 2021, Internet <Internet Search on November 29, 2021>.

Furthermore, in a communication system such as a telecommunication system or a cellular system, a narrow-band signal is defined as a signal transmitted in a frequency band having a bandwidth narrower than the bandwidth of a frequency band constituting a reference channel defined in the communication system.

Moreover, the narrow-band signal is defined as follows in the IoT communication system.
- A signal having a channel bandwidth of 10 MHz or less available in ISM (Industry Science and Medical) band and UNII (Unlicensed National Information Infrastructure) band
- A signal of a communication system using the frequency channel defined in the IEEE 802.15 standard
- A signal of a communication system standardized assuming communication speed of approximately 1 Mbps or less
- A signal of a communication system that continuously occupies a frequency band of 2 MHz or less bandwidth

On the basis of the above description, the present technology will be described in detail below.

### <<2. Configuration of Wireless Communication Device>>

### <Configuration of Wireless Communication Device>

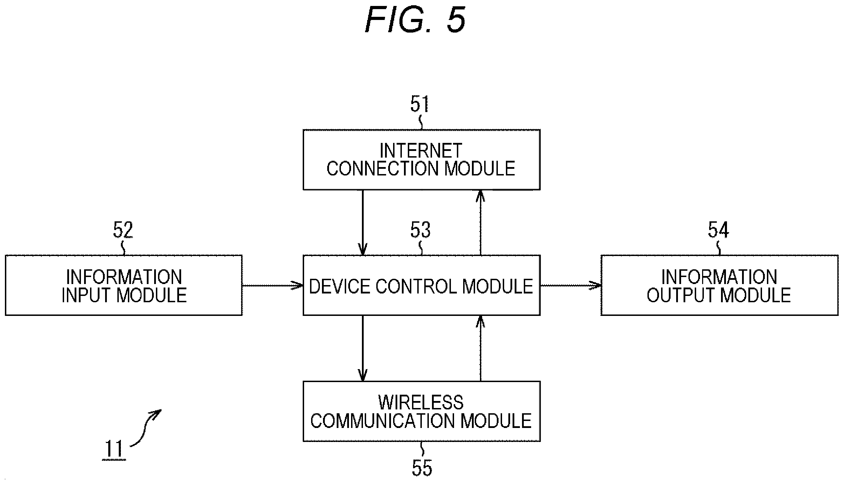

Fig. 5 is a block diagram illustrating a configuration example of a wireless communication device 11.

The wireless communication device 11 in Fig. 5 includes an Internet connection module 51, an information input module 52, a device control module 53, an information output module 54, and a wireless communication module 55.

Note that the wireless communication device may include only necessary modules.

The Internet connection module 51 is configured to implement functions such as a communication modem for connecting to the Internet network in a case of operating as a device of an access point according to control of the device control module 53. The Internet connection module 51 connects a public communication line and the Internet via an Internet service provider.

The information input module 52 outputs information indicating an instruction input by the user to the device control module 53. The information input module 52 includes a push button, a keyboard, a touch panel, and the like.

The device control module 53 includes a central processing unit (CPU), a read only memory (ROM), a random access memory (RAM), and the like. The device control module 53 executes a program stored in the ROM or the like, causes an application to function in a higher layer, and performs control to operate as a wireless communication device of an access point or a user terminal.

The information output module 54 outputs information regarding the operation state of the wireless communication device 11 or information obtained via the Internet, which is supplied from the device control module 53. The information output module 54 includes a display element such as an LED, a liquid crystal panel, or an organic display, a speaker that outputs sound or music, or the like. The information output module 54 displays and notifies information necessary for the user.

The wireless communication module 55 transmits the data supplied from the device control module 53 to the other wireless communication device 11 by performing wireless communication. The wireless communication module 55 receives data transmitted from another wireless communication device 11 by performing wireless communication, and outputs the received data to the device control module 53.

### <Configuration of Wireless Communication Module>

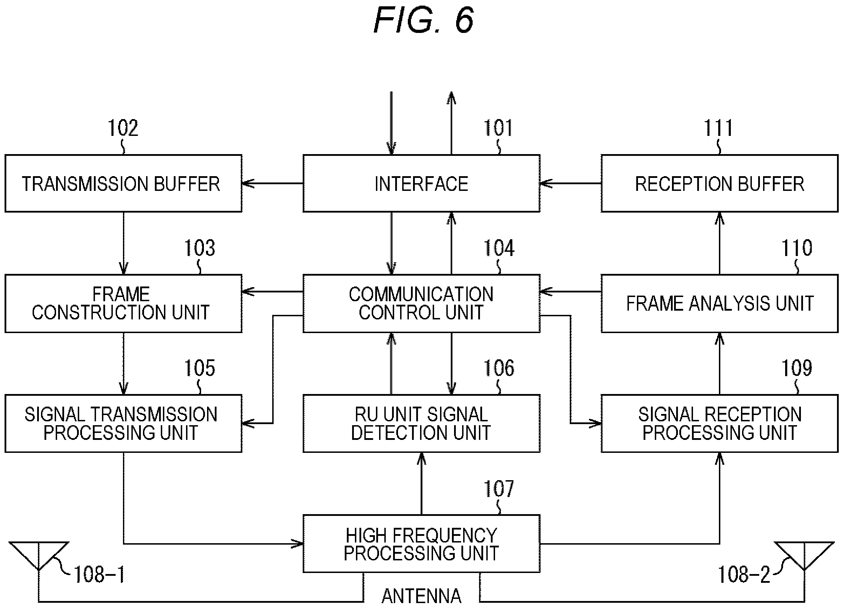

Fig. 6 is a block diagram illustrating a configuration example of the wireless communication module 55.

The wireless communication module 55 includes an interface 101, a transmission buffer 102, a frame construction unit 103, a communication control unit 104, a signal transmission processing unit 105, and an RU unit signal detection unit 106. Furthermore, the wireless communication module 55 includes a high frequency processing unit 107, antennas 108-1 and 108-2, a signal reception processing unit 109, a frame analysis unit 110, and a reception buffer 111.

The interface 101 functions as an interface for exchanging information input from the user from the device control module 53 and data supplied from the Internet network in a predetermined signal format.

The interface 101 outputs the information and data supplied from the device control module 53 to the transmission buffer 102 and the communication control unit 104. The interface 101 outputs information and data supplied from the reception buffer 111 to the device control module 53.

In a case of receiving information input from the user or data to be transmitted, the transmission buffer 102 temporarily stores the received information or data.

In accordance with an instruction from the communication control unit 104, the frame construction unit 103 constructs a data (a MAC layer protocol data unit (MPDU) frame or an A-MPDU (aggregated MPDU)) frame or an ACK frame by using the data accumulated in the transmission buffer 102 and the ACK information supplied from the communication control unit 104. The frame construction unit 103 outputs the constructed frame to the signal transmission processing unit 105.

The communication control unit 104 manages an operation for transmitting and receiving data and ACK information on the basis of the information supplied from the interface 101 and the frame analysis unit 110. The communication control unit 104 grasps the frame construction and the data transmission and reception state, and controls the frame construction unit 103, the signal transmission processing unit 105, the RU unit signal detection unit 106, and the signal reception processing unit 109.

Furthermore, the communication control unit 104 controls processing for operating in cooperation with the FH communication system according to the present technology. On the basis of the information supplied from the RU unit signal detection unit 106, the communication control unit 104 calculates a measurement parameter of a result of measuring a detected signal for a predetermined time, such as an interference timing at which interference is received from the FH communication system or a frequency resource unit in which a signal of the FH communication system is detected, and stores the periodic motion in the internal memory.

Furthermore, on the basis of the measurement parameter, the communication control unit 104 causes the frame construction unit 103 to construct the A-MPDU frame and the ACK frame of the wireless LAN system while avoiding the frequency resource unit in which the signal of the FH communication system is detected and the interference timing so as not to interfere with the FH communication system, and causes the signal transmission processing unit 105 to transmit the A-MPDU frame and the ACK frame.

Moreover, in a case where the wireless communication device 11 is an STA, the communication control unit 104 causes the frame construction unit 103 to construct a frame for sending the measurement parameter, and causes the signal transmission processing unit 105 to transmit the constructed frame. On the other hand, in a case where the wireless communication device 11 is an AP, the communication control unit 104 collects measurement parameters transmitted from STAs, sets a frequency resource unit available for each STA, constructs a frame including information regarding the set frequency resource unit, and causes the signal transmission processing unit 105 to transmit the frame.

Note that the interference timing may be a timing at which interference is received from the FH communication system, but may also be a timing at which interference is given to the FH communication system by transmitting a signal from the own wireless communication device. Therefore, hereinafter, the interference timing is also referred to as a timing at which interference with the FH signal occurs.

The signal transmission processing unit 105 performs encoding processing on data to be transmitted, and outputs the encoded data to the high frequency processing unit 107.

The RU unit signal detection unit 106 detects an FH signal by setting at least one frequency resource unit including a band overlapping with a band (channel) of an FH signal that is a narrow-band signal of the FH communication system as a detection target among frequency resource units used in the wireless LAN system. Then, in order to coexist with the FH communication system, the RU unit signal detection unit 106 outputs, to the communication control unit 104, information of the signal detection timing, the frequency band, and the received field strength at which the FH signal transmitted from the FH communication system existing in the surroundings is detected.

The high frequency processing unit 107 performs predetermined high frequency processing on the data supplied from the signal transmission processing unit 105, and constructs a signal in each frequency band among a plurality of frequency bands. The high frequency processing unit 107 transmits the constructed signal to the wireless communication device 11 of the communication counterpart via the antennas 108-1 and 108-2.

Furthermore, the high frequency processing unit 107 receives a signal in each frequency band transmitted from the wireless communication device 11 of the communication counterpart via the antennas 108-1 and 108-2, and outputs the received signal to the signal reception processing unit 109.

The signal reception processing unit 109 processes the signal supplied from the high frequency processing unit 107 and outputs the processed signal to the frame analysis unit 110.

The frame analysis unit 110 extracts a predetermined data frame from the received data, and extracts various types of information and data such as header information, a delimiter, and a payload from the ACK frame. The frame analysis unit 110 outputs the extracted information to the communication control unit 104, and outputs the extracted data to the reception buffer 111.

The reception buffer 111 stores the data supplied from the frame analysis unit 110.

Note that the wireless communication module 55 described above is configured to be closed in the wireless communication device 11, but may be configured to detect and measure a signal from the FH communication system in response to a request from another wireless communication device.

In this case, the wireless communication module 55 is configured to add an information element describing the measurement parameter and notify the other wireless communication device as a notification frame. The notification frame is constructed in the frame construction unit 103, and a frequency resource unit that does not interfere with the surrounding FH communication system is selected in the communication control unit 104 and transmitted via the signal transmission processing unit 105.

### <<3. Usage Example of Frequency Band with Bandwidth of 20 MHz>>

### <Configuration of Frequency Resource Unit>

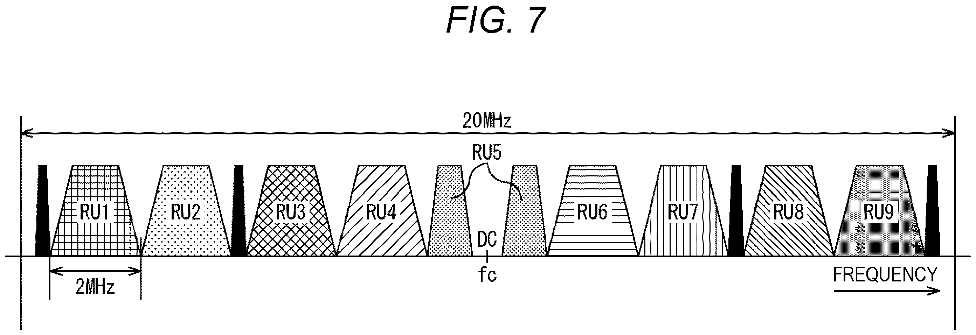

Fig. 7 is a diagram illustrating a configuration example of a frequency resource unit.

Fig. 7 illustrates a configuration example of a frequency resource unit defined in a conventional wireless LAN system (IEEE 802.11ax). In the case of Fig. 7, an example is illustrated in which a total of nine frequency resource units RU1 to RU9 are sequentially arranged from the lowest frequency on the left in the drawing to the highest frequency on the right in the drawing in a frequency band with a bandwidth of 20 MHz.

Each of the frequency resource units RU1 to RU9 is configured using 26 subcarriers.

In the frequency band with the bandwidth of 20 MHz, four frequency resource units RU1 to RU4 are each arranged in units of 2 MHz on the low frequency side together with a subcarrier for a guard indicated by black.

Furthermore, in the vicinity of the center frequency fc of the frequency band of 20 MHz, the fifth frequency resource unit RU5 from the left is arranged using the preceding and following 13 subcarriers except for a DC component, which is determined not to output a signal in the standard.

Moreover, four frequency resource units RU6 to RU9 are each arranged on the high frequency side in units of 2 MHz.

As described above, the frequency band of 20 MHz in one frequency channel is configured by arranging the frequency resource units RU1 to RU9 having a bandwidth of about 2 MHz.

### <Configuration of Frequency Channel>

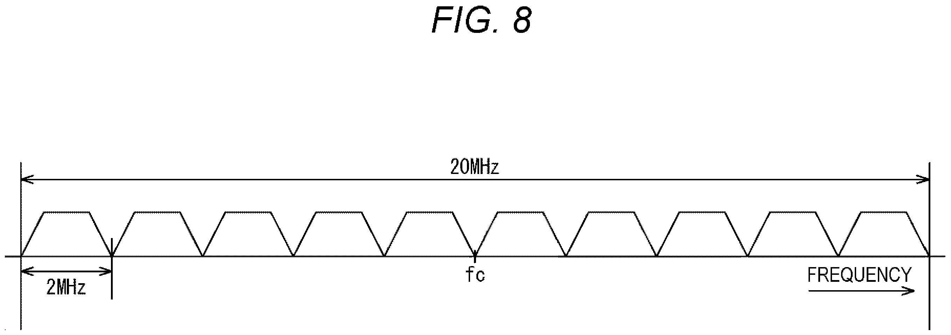

Fig. 8 is a diagram illustrating a configuration example of a frequency channel of an FH communication system in a frequency band of 20 MHz.

Fig. 8 illustrates an example of a case where a frequency band of 20 MHz such as in a wireless LAN system is used as one channel for convenience. That is, about 10 channels of 2 MHz are arranged in the frequency band of 20 MHz.

As described above, in the FH communication system, a frequency resource close to the frequency resource unit in the wireless LAN system illustrated in Fig. 7 is used as the channel.

Note that, for example, in an FH communication system such as Bluetooth Low Energy, the transmission power can be suppressed to be small. Therefore, in Figs. 7 and 8, the height in the vertical axis direction of the FH communication system in Fig. 8 is lower than the height in the vertical axis direction of the wireless LAN system in Fig. 7, and the magnitudes of the transmission power can be relatively compared. This similarly applies to the following drawings.

### <First Coexistence Method>

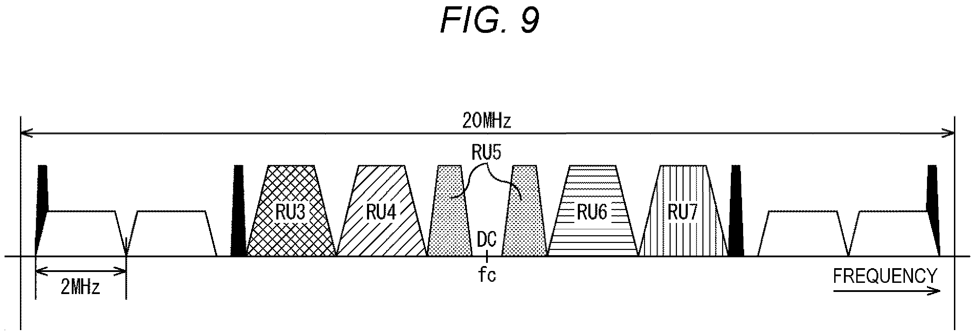

Fig. 9 is a diagram illustrating a first coexistence method of the wireless LAN system and the FH communication system according to the present technology.

In the present technology, both communication systems can coexist by sharing and using the frequency resources to be used in the frequency band of 20 MHz between both communication systems.

Fig. 9 illustrates the first coexistence method in which the wireless LAN system uses the frequency resource units RU3 to RU7 close to the center frequency fc in the frequency band of 20 MHz, and the FH communication system uses each two channels at both ends of the frequency band of 20 MHz.

Note that there is a portion where a subcarrier as a guard in the wireless LAN system and a channel of the FH communication system overlap, but in the FH communication system, coexistence is possible by a method such as ignoring data of the overlapping subcarrier. This similarly applies to the following drawings.

By using the first coexistence method described above, the FH communication system can perform the FH operation using the four channels in the bandwidth of 20 MHz.

### <Second Coexistence Method>

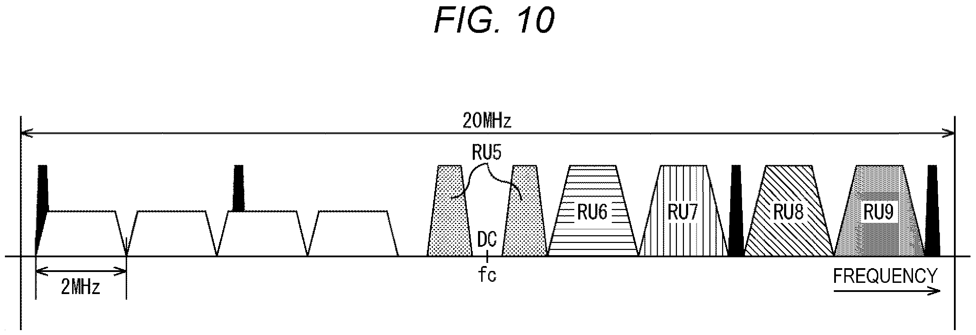

Fig. 10 is a diagram illustrating a second coexistence method of the wireless LAN system and the FH communication system according to the present technology.

Fig. 10 illustrates the second coexistence method in which the wireless LAN system uses the frequency resource units RU5 to RU9 close to the highest frequency in the frequency band of 20 MHz, and the FH communication system uses four channels close to the lowest frequency in the frequency band of 20 MHz.

By using the second coexistence method described above, the FH communication system can perform the FH operation using the four channels having low frequencies in the frequency band of 20 MHz.

### <Third Coexistence Method>

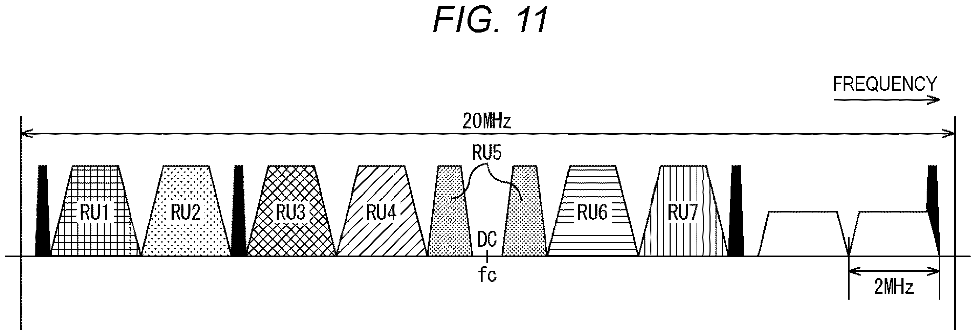

Fig. 11 is a diagram illustrating a third coexistence method of the wireless LAN system and the FH communication system according to the present technology.

Fig. 11 illustrates the third coexistence method in which the wireless LAN system uses the frequency resource units RU1 to RU7 close to the lowest frequency in the frequency band of 20 MHz, and the FH communication system uses two channels close to the highest frequency in the frequency band of 20 MHz.

By using the third coexistence method described above, the FH communication system can perform the FH operation using two channels having high frequencies in the frequency band of 20 MHz.

### <Fourth Coexistence Method>

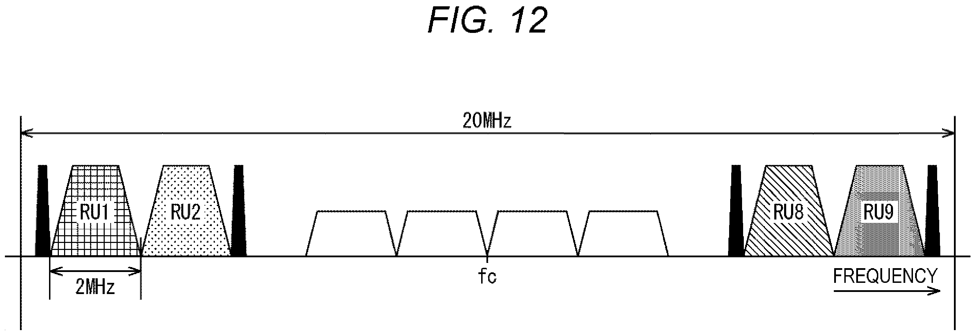

Fig. 12 is a diagram illustrating a fourth coexistence method of the wireless LAN system and the FH communication system according to the present technology.

Fig. 12 illustrates the fourth coexistence method in which the wireless LAN system uses the frequency resource units RU1, RU2, and RU8 to RU9 close to the frequencies of both ends in the frequency band of 20 MHz, and the FH communication system uses four channels in the vicinity of the center frequency of the frequency band of 20 MHz.

By using the fourth coexistence method described above, the PH communication system can perform the FH operation using each two channels in the vicinity of the frequencies at both ends of the 20 MHz frequency band.

### <Fifth Coexistence Method>

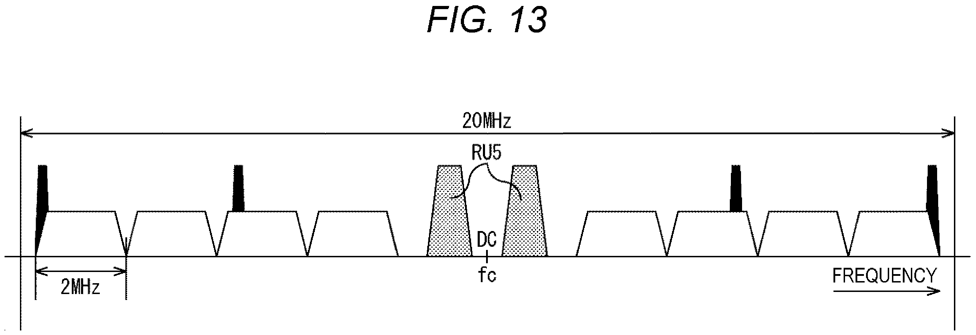

Fig. 13 is a diagram illustrating a fifth coexistence method of the wireless LAN system and the FH communication system according to the present technology.

Fig. 13 illustrates the fifth coexistence method in which the wireless LAN system uses only the frequency resource unit RU5 close to the center frequency in the 20 MHz frequency band, and the FH communication system uses each four channels at both ends of the 20 MHz frequency band except for the frequency resource unit RU5.

By using the fifth coexistence method described above, the FH communication system can perform the FH operation using each four channels in the vicinity of the frequencies at both ends of the 20 MHz frequency band.

### <Sixth Coexistence Method>

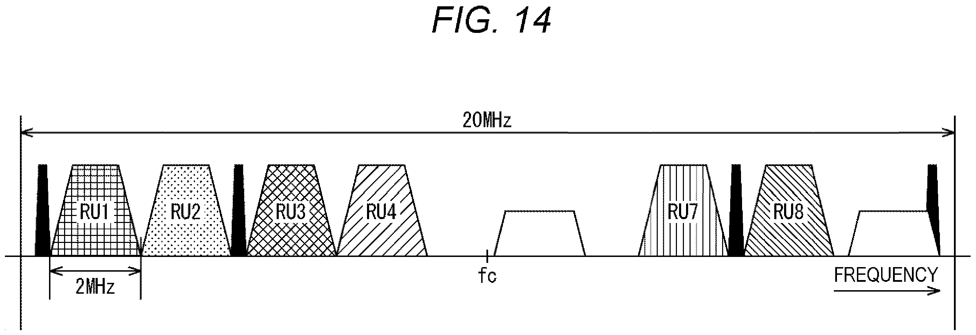

Fig. 14 is a diagram illustrating a sixth coexistence method of the wireless LAN system and the FH communication system according to the present technology.

Fig. 14 illustrates the sixth coexistence method in which the wireless LAN system uses the frequency resource units RU1 to RU4, RU6, and RU7 in the frequency band of 20 MHz, and the FH communication system uses a channel close to the center frequency of the frequency band of 20 MHz and a channel close to the highest frequency of the remaining frequencies.

By using the sixth coexistence method described above, the FH communication system can perform the FH operation using two channels in the frequency band of 20 MHz.

As described above, the wireless LAN system and the FH communication system can coexist and operate in various methods by managing the frequency bands to be used in the wireless LAN system and the FH communication system for each frequency resource unit in the frequency band of 20 MHz.

Here, the OFDM subcarrier spacing of the wireless LAN system is conventional wireless LAN: 312.5 KHz, IEEE 802.11ax: 78.125 KHz, and 1 Resource Unit = 26 subcarriers. This enables allocation of frequency resources in a bandwidth unit of approximately 2 MHz.

The OFDM symbol length is conventional wireless LAN: 3.2 µs and IEEE 802.11ax: 12.8 µs. In Bluetooth Classic, 79 channels are prepared with a bandwidth of 80 MHz, a channel bandwidth of 1 MHz, frequency hopping every 0.625 ms, and the interval is up to 5 ms.

In Bluetooth Low Energy, 40 channels are prepared with a bandwidth of 80 MHz, a channel bandwidth of 2 MHz, advertisement channels (three: Ch37, Ch38, Ch39), a minimum interval of 7.5 ms, the interval is increased up to 4 seconds, and among data channels (Ch0 to Ch36), by the AFH function, a channel that is interfered is not used.

In Bluetooth, in a case where the 2.4 GHz band is used, a gap between signals of IEEE 802.11b of the wireless LAN system can be used. However, when IEEE 802.11g using signals of the OFDM scheme exists, an unused frequency channel is used.

Currently, Bluetooth is not considered to be applied in the 5 GHz band, but there is still a possibility that the 5 GHz band will be used in the future. Furthermore, it is also conceivable to actively use the 6 GHz band or the like use of which is planned to be extended for a wireless LAN or the like.

In the wireless LAN, a frequency usage method called OFDMA is defined, and according to this method, a predetermined frequency channel bandwidth (20 MHz, 40 MHz, 80 MHz, 160 MHz, 320 MHz) is continuously used.

Furthermore, in the latest IEEE 802.11ax standard, the technology of OFDMA, which uses one channel in units of predetermined frequency resources (resource units), is adopted, so that each frequency resource unit having a frequency bandwidth narrower than that of the conventional frequency resource unit can be used.

Specifically, OFDMA is a frequency usage scheme in which frequency resource units corresponding to a bandwidth of approximately 2 MHz are divided and each used, and in a wireless LAN system, it is possible to house many users by using the scheme.

Therefore, in the present technology, in a frequency band operating as a wireless LAN system (first wireless communication system), a narrow-band signal of an FH communication system (second wireless communication system) that is a signal having a bandwidth narrower than the frequency band and different from the wireless LAN system is detected, and control is performed to transmit the wireless signal of the first wireless communication system while avoiding the first band in which the narrow-band signal is detected.

Furthermore, in the present technology, control is performed to transmit a wireless signal by using a use resource unit that is a frequency resource unit used for wireless communication, the use resource unit being set for each device on the basis of a measurement parameter by a wireless communication device. Moreover, in addition, control is performed to transmit a wireless signal by using a frequency resource unit other than a coexistence resource unit (COEX RU) that is a frequency resource unit for coexistence with the FH communication system (second wireless communication system) within the frequency band, the coexistence resource unit being set on the basis of the usage status of the frequency resource unit by the wireless communication device.

The COEX RU is a frequency resource unit available by the FH communication system, and increase or decrease of the COEX RU can be controlled according to the setting. For example, in a case where data transmission demand is small in the wireless LAN system, the COEX RU is set more, and as the data transmission demand increases, the setting of the COEX RU is released.

As a result, in a case where the use of the wireless LAN system is not active, a frequency channel that can be used for the FH communication system is prepared, but in a case where the use of the wireless LAN system becomes active, all the bands can be used in the wireless LAN system as before.

The FH communication system can coexist with the wireless LAN system in which the existence of the FH communication system is hardly detected by the FH communication system using the frequency resource unit that is always the COEX RU available.

### <<4. Operation of Wireless LAN System>>

### <First Sequence of Information Acquisition>

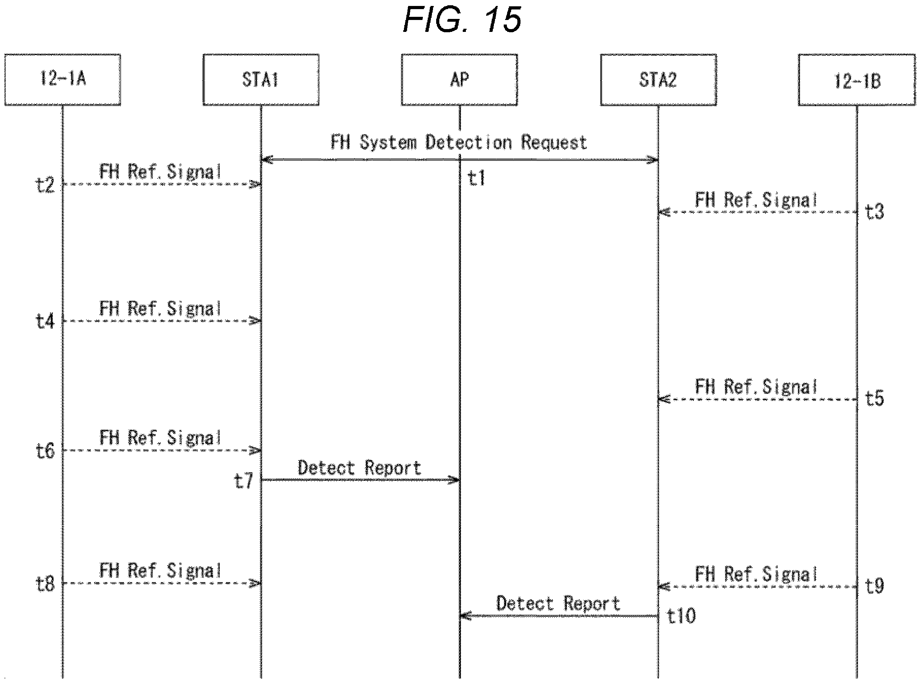

Fig. 15 is a diagram illustrating a first sequence of information acquisition necessary for coexistence of the wireless LAN system and the FH communication system of the present technology.

Fig. 15 illustrates a state in which an FH communication device 12-1A, the wireless communication device 11-1 operating as an STA1, the wireless communication device 11-2 operating as an AP, the wireless communication device 11-1 operating as an STA2, and an FH communication device 12-1B exist from the left.

That is, Fig. 15 illustrates an example in which one wireless communication device 11-1, two wireless communication devices 11-2, and two FH communication devices 12-1 illustrated in Fig. 1 are included.

At timing t1, the AP transmits a Detection Request Frame of a signal of the FH communication system to the STA1 and the STA2.

At this time, the STA1 and the STA2 are in a state of being able to intermittently detect signals from the FH communication devices 12-1A and 12-1B existing around the STA1 and the STA2, respectively.

At timings t2, t4, t6, and t8, the FH communication device 12-1A transmits a signal (FH Ref. Signal).

The STA1 detects and measures the FH Ref. Signal transmitted from the FH communication device 12-1A over a predetermined time (for example, between timings t2 to t6). Note that, at the time of the measurement, a period in which the signal appears is specified with reference to the detected signal.

At timing t7, the STA1 transmits, to the AP, a detection report (Detect Report Frame) in which measurement parameters obtained from a result of measuring FH Ref. Signal for a predetermined time are described. The AP receives the Detect Report Frame transmitted from the STA1.

On the other hand, at timings t3, t5, and t9, the FH communication device 12-1B transmits the FH Ref. Signal.

The STA2 detects and measures the FH Ref. Signal transmitted from the FH communication device 12-1B over a predetermined time (for example, between timings t3 to t9). At timing t10, the STA2 transmits, to the AP, Detect Report Frame in which measurement parameters obtained from a result of measuring the FH Ref. Signal for a predetermined time are described. The AP receives the Detect Report Frame transmitted from the STA2.

These pieces of processing are repeatedly performed.

Note that Fig. 15 illustrates an example in which a signal detected is measured over a predetermined time after the signal is detected. However, at that time, in a case where a signal exceeding a predetermined reception field strength is detected, the detected narrow-band signal may be measured.

### <Second Sequence of Information Acquisition>

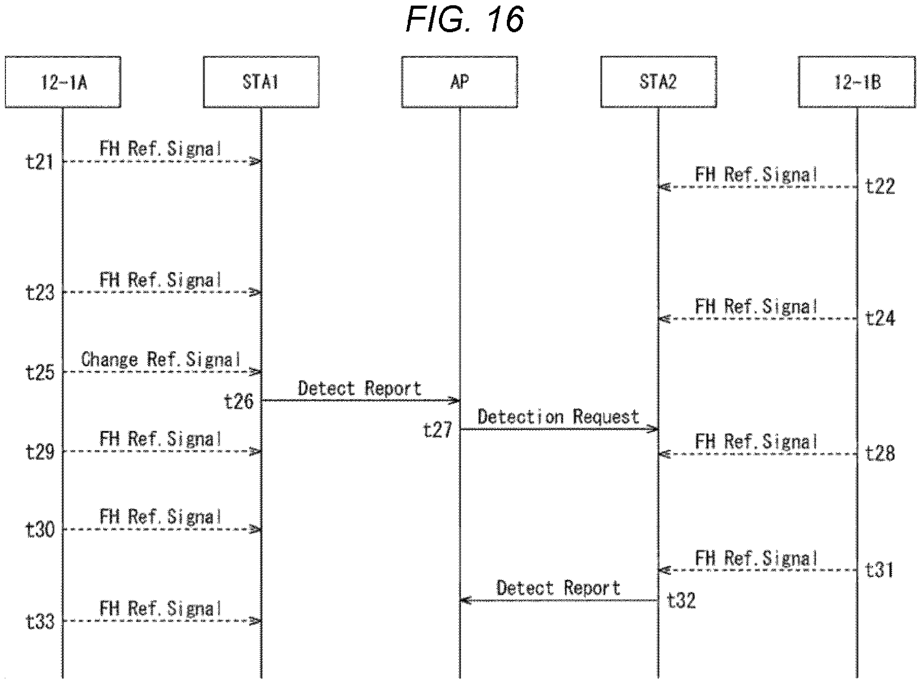

Fig. 16 is a diagram illustrating a second sequence of information acquisition necessary for coexistence of the wireless LAN system and the FH communication system of the present technology.

Similarly to Fig. 15, Fig. 16 illustrates a state in which the FH communication device 12-1A, the STA1, the AP, the STA2, and the FH communication device 12-1B exist from the left.

At timings t21 and t23, the FH communication device 12-1A transmits FH Ref. Signal. Furthermore, at timing t25, the FH communication device 12-1A transmits Change Ref. Signal, which is a signal having parameters different from those in the FH Ref. Signal. At timings t29, t30, and t33, the FH communication device 12-1A transmits a signal (FH Ref. Signal) having the same parameters as those in the Change Ref. Signal.

The STA1 detects and measures the FH Ref. Signal transmitted from the FH communication device 12-1A over a predetermined time. At timing t26, when detecting the Change Ref. Signal transmitted from the FH communication device 12-1A, the STA1 transmits, to the AP, Detect Report Frame in which information regarding the Change Ref. Signal, which is a signal having different parameters, is described.

In a case of receiving the Detect Report Frame transmitted from the STA1, the AP transmits Detection Request Frame to the STA2 at timing t27.

On the other hand, at timings t22, t24, t28, and t31, the FH communication device 12-1B transmits FH Ref. Signal.

The STA2 observes the FH Ref. Signal transmitted from the FH communication device 12-1B. The STA2 receives the Detection Request Frame transmitted from the AP at timing t27, and transmits, to the AP at timing t32, Detect Report Frame in which measurement parameters obtained as a result of measuring the FH Ref. Signal transmitted from the FH communication device 12-1B are described. The AP receives the Detect Report Frame transmitted from the STA2.

Note that the STA2 may not transmit the Detect Report Frame in a case where the FH Ref. Signal is no longer detected or in a case where the FH Ref. Signal is not changed.

Thereafter, these pieces of processing are repeated.

Fig. 16 illustrates an example in which the Detect Report Frame is transmitted to the AP in a case where a signal having a parameter different from that of the signal detected so far is detected. However, the Detect Report Frame may be transmitted to the AP in a case where the FH Ref. Signal is detected a predetermined number of times. As described above, the Detect Report Frame is transmitted not only in a case where there is a request but also in a case where the STA determines that reporting is necessary.

### <Sequence of data transmission>

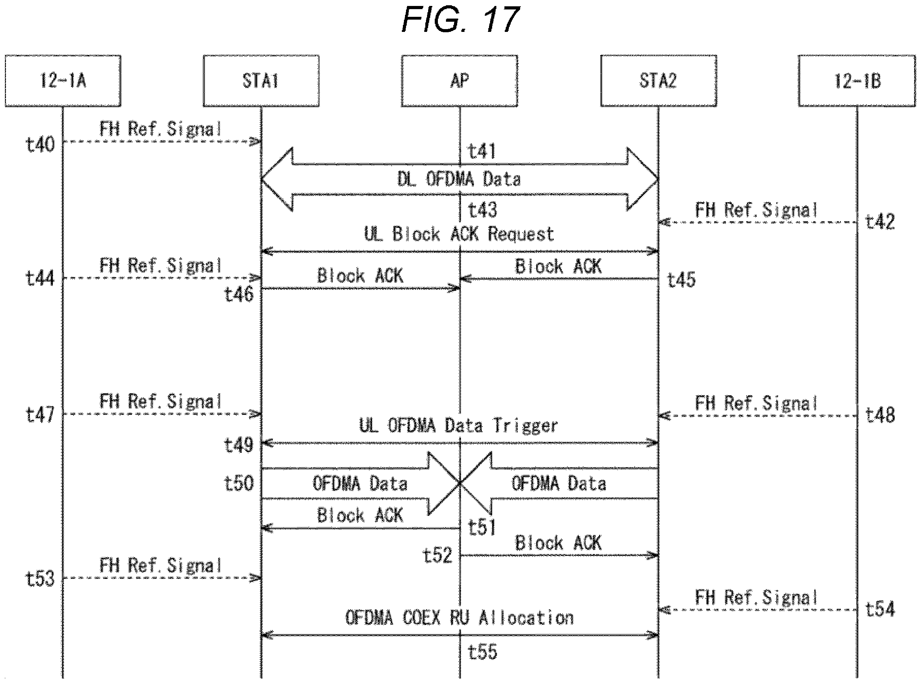

Fig. 17 is a diagram illustrating a sequence of data transmission of the present technology.

Fig. 17 illustrates a sequence of data transmission performed by the wireless LAN system and the FH communication system coexisting in a frequency band of a predetermined bandwidth.

For example, Fig. 17 illustrates a sequence in which each wireless communication device uses a frequency resource unit that does not interfere with an FH communication system existing around the wireless communication device in a case where the wireless LAN system performs multi-user communication using, for example, the OFDMA scheme.

As indicated by timing t40, before timing t41, the FH communication device 12-1A transmits FH Ref. Signal at predetermined intervals. Furthermore, similarly, the FH communication device 12-1B transmits FH Ref. Signal at predetermined intervals.

The AP acquires the measurement result of the surrounding FH communication system from the measurement parameters described in the Detect Report Frame received by the sequence in Figs. 15 and 16 described above. Note that, although not illustrated, at this time, similarly to the STA in Fig. 15 or 16, the AP itself also detects and measures the signal from the surrounding FH communication device, and thus, also acquires the measurement result of the surrounding FH communication system measured by itself.

According to the measurement results of the surrounding FH communication systems, the AP can grasp which frequency channel the FH communication device 12-1A transmits FH Ref. Signal using at timings t44, t47, and t53, and which frequency channel the FH communication device 12-1B transmits FH Ref. Signal using at timings t42, t48, and t54.

In a case where multi-user communication (hereinafter, referred to as DL OFDMA communication) using the Downlink (DL) OFDMA scheme in the downlink direction is performed on the wireless communication device 11 (STA1, STA2), the AP sets frequency resource units that do not interfere with the FH communication devices 12-1A and 12-1B in consideration of the frequency channels of the FH communication devices 12-1A and 12-1B.

At timing t41, the AP selects frequency resource units that do not interfere with the signals from the corresponding FH communication devices 12-1A and 12-1B for each of the STA1 and the STA2 in the DL OFDMA communication, and multiplexes and transmits data (DL OFDMA DATA).

Moreover, even in a case of receiving Block ACK for confirming data reception from each of the STA1 and the STA2, the AP sets a frequency resource unit in which each transmission has less interference with communication of the surrounding FH communication system.

That is, at timing t43, the AP transmits a UL Block ACK Request Trigger frame in which the frequency resource unit is set such that each of the STA1 and the STA2 can return a Block ACK frame in the frequency resource unit that does not interfere with the FH communication system. With this Trigger frame, the AP prompts each of the STA1 and the STA2 to transmit Block ACK frames in the frequency resource units that do not interfere with the FH communication system.

At timing t45 avoiding the timing t44 at which FH Ref. Signal is transmitted, the STA2 transmits a Block ACK frame to the AP in the frequency resource unit set in the UL Block ACK Request Trigger frame. The AP receives the Block ACK frame transmitted from the STA2.

At timing t46, the STA1 transmits a Block ACK frame to the AP in the frequency resource unit set in the UL Block ACK Request Trigger frame. The AP receives the Block ACK frame transmitted from the STA1.

At timing t49 avoiding timing t47 and t48 at which FH Ref. Signal is transmitted, the AP transmits a UL OFDMA DATA Trigger frame to the STA1 and the STA2 in order to perform multi-user communication (hereinafter, referred to as UL OFDMA communication) using the uplink (UL) OFDMA scheme in the uplink direction.

The UL OFDMA DATA Trigger frame is a frame for causing the STA1 and the STA2 to select frequency resource units that do not interfere with the FH communication system, and to multiplex and transmit data.

As a result, the STA1 and the STA2 that have received the UL OFDMA DATA Trigger frame can set frequency resource units available for the UL OFDMA communication.

At timing t50, the STA1 and the STA2 perform the UL OFDMA communication using frequency resource units that do not interfere with the surrounding FH communication device 12-1A and the surrounding FH communication device 12-1B, respectively. As a result, the STA1 and the STA2 can transmit data while avoiding the frequency resource unit (that is, at least one frequency resource unit, including a band that overlaps the frequency channel of the FH signal) in which the FH signal from the surrounding FH communication device is detected. In other words, the STA1 and the STA2 can transmit data in the other frequency resource units except for the frequency resource unit in which the FH signal from the surrounding FH communication device is detected.

At timing t51, the AP returns a Block ACK frame to the STA1 using the frequency resource unit that does not interfere with the surrounding FH communication system. The STA1 receives the Block ACK frame transmitted from the AP.

At timing t52, the AP returns a Block ACK frame to the STA2 by using the frequency resource unit that does not interfere with the surrounding FH communication system. The STA2 receives the Block ACK frame transmitted from the AP.

Moreover, at timing t55 avoiding timing t53 and t54 at which FH Ref. Signal is transmitted, for example, as in the first to sixth coexistence methods illustrated in Figs. 9 to 14, the AP performs setting (OFDMA CO EX RU Allocation) of a COEX RU, which is a frequency resource unit coexisting with the FH communication system in advance, for the next DL OFDMA communication or UL OFDMA communication.

The COEX RU is an interference prevention resource unit, which is a frequency resource unit of a frequency band that is not used in its own wireless LAN system. That is, the COEX RU is set from the frequency band excluding the frequency resource unit RU so that the wireless LAN system and the FH communication system can coexist in the frequency band of the frequency width of 20 MHz by the first to sixth coexistence methods illustrated in Figs. 9 to 14.

The setting of the COEX RU is managed and referred to by the AP, and is used to set a frequency resource unit available for each STA. Furthermore, information regarding the setting of the COEX RU may be described, for example, in a Trigger frame to be transmitted to the STA1 and the STA2 and conveyed to the STA1 and the STA2. Furthermore, the frame conveying the COEX RU is not limited to the Trigger frame, and may be a frame transmitted from the AP to the STA. In this case, in the STA, data transmission is performed by using a frequency resource unit other than the COEX RU.

Note that this setting is performed, for example, according to the presence or absence of response reception from the STA. Furthermore, this setting is not necessarily performed, and may be performed from among frequency resource units used in its own wireless LAN system in order to coexist with the FH communication system.

That is, in the AP, the setting of the COEX RU may be performed before timing t40 for DL transmission at timing t41 or UL transmission at timing t49. In this case, in the DL transmission at timing t41 or the UL transmission at timing t49, it is also possible to refer to the COEX RU set before timing t40.

For example, in a case where the demand for data transmission in the own wireless LAN system is small, as in the third coexistence method illustrated in Fig. 11, by increasing the ratio of this COEX RU in the operating frequency band, the frequency channel of data communication in the FH communication system can be increased.

On the other hand, in a case where the amount of data transmission in the own wireless LAN system increases, as in the sixth coexistence method illustrated in Fig. 14, by decreasing the ratio of this COEX RU in the operating frequency band, adjustment can be made so that the data transmission in the wireless LAN system can be implemented smoothly.

That is, the wireless LAN system and the FH communication system can effectively coexist by increasing or decreasing the setting of the COEX RU according to the change in the transmission demand of the wireless LAN system.

### <<5. Frame configuration>>

### <Configuration of FH System Detection Request Frame>

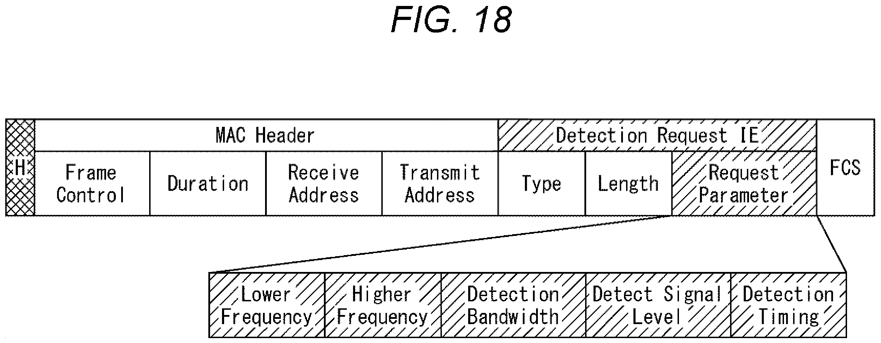

Fig. 18 is a diagram illustrating a configuration example of an FH System Detection Request frame according to the present technology.

This FH System Detection Request frame may be configured as an independent management frame. In this case, the System Detection Request frame is configured by adding a Detection Request information element (IE) to a predetermined MAC header.

Note that the System Detection Request frame may be configured as an information element (IE) added to, for example, a beacon frame, an association-related frame, or the like, in addition to a single management frame.

The Detection Request IE includes Type, Length, and Value (Request Parameter).

The Request Parameter is a detection parameter for requesting detection of a signal. The Request Parameter includes essential parameters such as Lower Frequency, Higher Frequency, Detection Bandwidth, Detect Signal Level, and Detection Timing. Note that the Request Parameter may include parameters other than these essential parameters.

The Lower Frequency is a parameter indicating the lowest frequency channel for which detection is requested.

The Higher Frequency is a parameter indicating the highest frequency channel for which detection is requested.

The Detection Bandwidth is a parameter indicating a bandwidth of a signal for which detection is requested. A signal is detected within a frequency band of a bandwidth designated by the Detection Bandwidth.

The Detect Signal Level is a parameter indicating a threshold received field strength of a signal for which detection is requested. In a case where a signal exceeding the strength of the Detect Signal Level is detected, measurement is performed in the STA or the AP.

The Detection Timing is a parameter indicating a detection time (measurement time). The detected signal is measured for the time indicated by the Detection Timing.

### <Configuration of FH System Detect Report Frame>

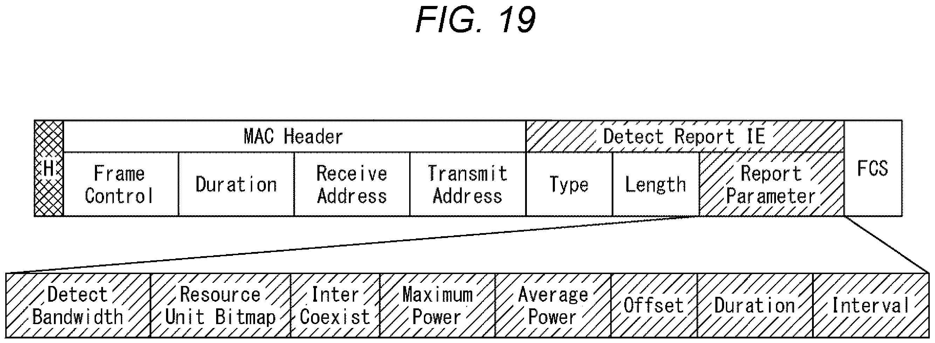

Fig. 19 is a diagram illustrating a configuration example of an FH System Detection Report frame according to the present technology.

The FH System Detect Report frame may be configured as an independent management frame. In this case, the FH System Detect Report frame is configured by adding a Detect Report information element (IE) to a predetermined MAC header.

Note that the FH System Detect Report frame may be configured as an information element (IE) added to, for example, another frame, an association-related frame, or the like, in addition to a single management frame.

The Detect Report IE includes Type, Length, and Value (Report Parameter).

The Report Parameter is a measurement parameter obtained from a measurement result of the detected signal. The Report Parameter includes parameters such as Detection Bandwidth, Resource Unit Bitmap, Inter Coexist, Maximum Power, Average Power, and Offset, Duration, and Interval in Fig. 4. Note that description of parameters common to those in Fig. 18 is omitted.

The Detection Bandwidth is a parameter indicating a bandwidth in which a signal is detected.

The Resource Unit Bitmap is a parameter that indicates a bitmap indicating a frequency resource unit in which a signal is detected.

The Inter Coexist is a parameter indicating that the measurement parameter included in this frame (is not measured) but is designated in the wireless communication device 11. Note that a method of using the Inter Coexist will be described later with reference to Fig. 25.

The Maximum Power is a parameter indicating the value of the maximum detection power.

The Average Power is a parameter indicating the value of average detection power.

Note that, among the Report Parameters, the Detection Bandwidth, the Resource Unit the Bitmap, and the Inter Coexist are essential parameters, and the other parameters are not necessarily included. Furthermore, in addition to these, a parameter required as the Report Parameter may be appropriately defined and configured to be reported to the other party.

### <<6. Operation of Wireless Communication Device>>

### <Status Grasping Processing of Frequency Resource Unit of AP>

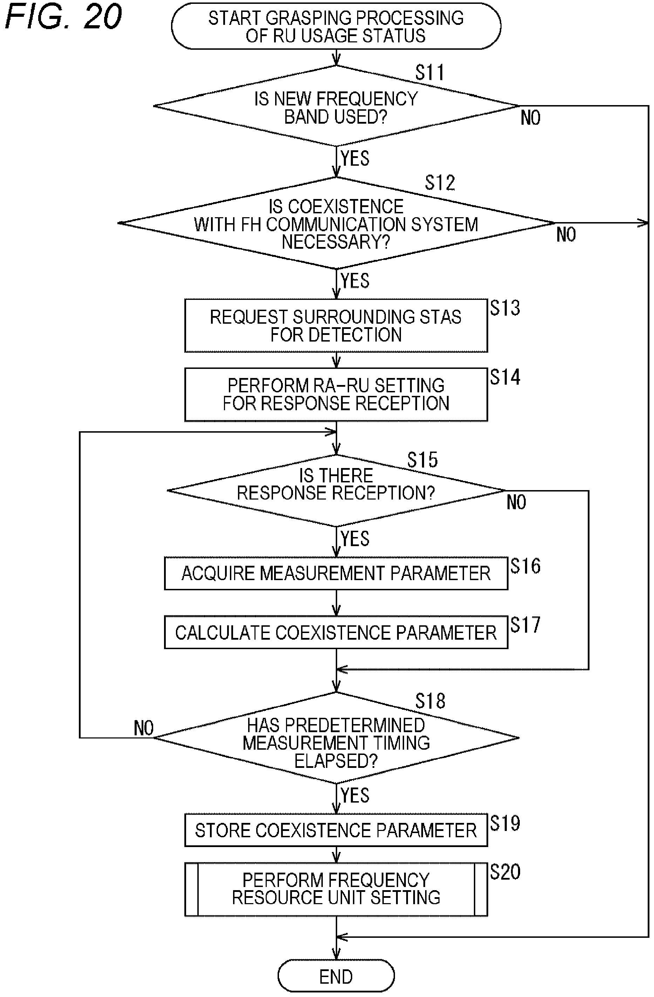

Fig. 20 is a flowchart illustrating status grasping processing of the frequency resource unit of an AP.

Note that the processing in Fig. 20 is processing performed by the communication control unit 104 of the AP controlling each unit of the wireless communication module 55.

In step S11, the communication control unit 104 of the AP determines whether or not to use a new frequency band that can be used by the FH communication system or the like. In a case where it is determined in step S11 that the new frequency band is used, the processing step proceeds to step S12.

In step S12, the communication control unit 104 determines whether or not coexistence with the FH communication system is necessary. In a case where it is determined in step S12 that coexistence with the FH communication system is necessary, the processing step proceeds to step S13.

In step S13, the communication control unit 104 transmits a detection request frame (FH System Detection Request frame) including a detection parameter to request detection of a signal of the FH communication system to surrounding STAs (timing t1 in Fig. 15).

In step S14, the communication control unit 104 sets a random access resource unit (RA-RU) for response reception such that any STA can perform transmission using only some frequency resource units without using all frequency bands. This setting information may be included in the detection request frame, the Trigger frame, or the like described above and transmitted. The RA-RU is set to be distributed in the frequency axis direction in units of frequency resource units. Note that the processing of step S14 may not be performed.

By using the RA-RU, the STA can perform communication toward the AP by using a frequency resource unit that does not interfere with the FH communication system.

After receiving the detection request frame, the STA responds to the AP by transmitting a detection report frame (FH System Detection Report frame) to the detection request frame by using the RA-RU (timing t7 in Fig. 15).

In step S15, the communication control unit 104 determines whether or not there is response reception from the STA. In a case where it is determined in step S15 that there is response reception from the STA, the processing step proceeds to step S16.

In step S16, the communication control unit 104 acquires the measurement parameter described in the detection report frame.

In step S17, the communication control unit 104 calculates a coexistence parameter regarding coexistence for each STA on the basis of the acquired measurement parameter, the coexistence parameter indicating a frequency resource unit, timing, and the like that can be used for coexistence by each STA.

In a case where it is determined in step S15 that there is no response reception, the processing step proceeds to step S18.

In step S18, the communication control unit 104 determines, for example, whether or not a predetermined measurement timing corresponding to the maximum interval at which signals are transmitted in the FH communication system has elapsed. In a case where it is determined in step S18 that the predetermined measurement timing has not elapsed, the processing step returns to step S15, and the subsequent processing steps are repeated.

In a case where it is determined in step S18 that the predetermined measurement timing has elapsed, the processing step proceeds to step S19.

In step S19, the communication control unit 104 stores the coexistence parameters from all the STAs.

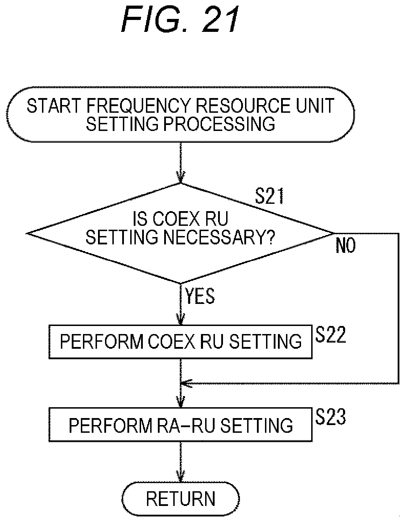

In step S20, the communication control unit 104 performs frequency resource unit setting processing on the basis of the stored coexistence parameters. The frequency resource unit setting processing is described later with reference to Fig 21. Thereafter, the processing in Fig. 20 ends.

Furthermore, in a case where it is determined in step S11 that the new frequency band is not used or in a case where it is determined in step S12 that the coexistence with the FH communication system is not necessary, the processing in Fig. 20 ends.

### <Frequency Resource Unit Setting Processing>

Fig. 21 is a flowchart illustrating frequency resource unit setting processing in step S20 in Fig. 20.

In step 21, the communication control unit 104 determines whether or not setting of COEX RU is necessary.

In a case where there is response reception from the STA, it is determined in step S21 that the setting of the COEX RU is necessary, and the processing step proceeds to step S22.

In step S22, the communication control unit 104 performs the setting of the COEX RU on the basis of the stored coexistence parameters and the like.

In a case where there is no response reception from the STA, it is determined in step S21 that the setting of the COEX RU is not necessary, the processing in step S22 is skipped, and the processing step proceeds to step S23.

In step S23, the communication control unit 104 performs setting of the RA-RU on the basis of the stored coexistence parameters and the like. Thereafter, the frequency resource unit setting processing in Fig. 21 ends.

Note that information regarding the COEX RU and the RA-RU set as described above is included in the Trigger Frame used for data transmission of the UL OFDMA communication and transmitted to the STA.

### <Measurement Processing of Usage Status of Frequency Resource Unit of STA>

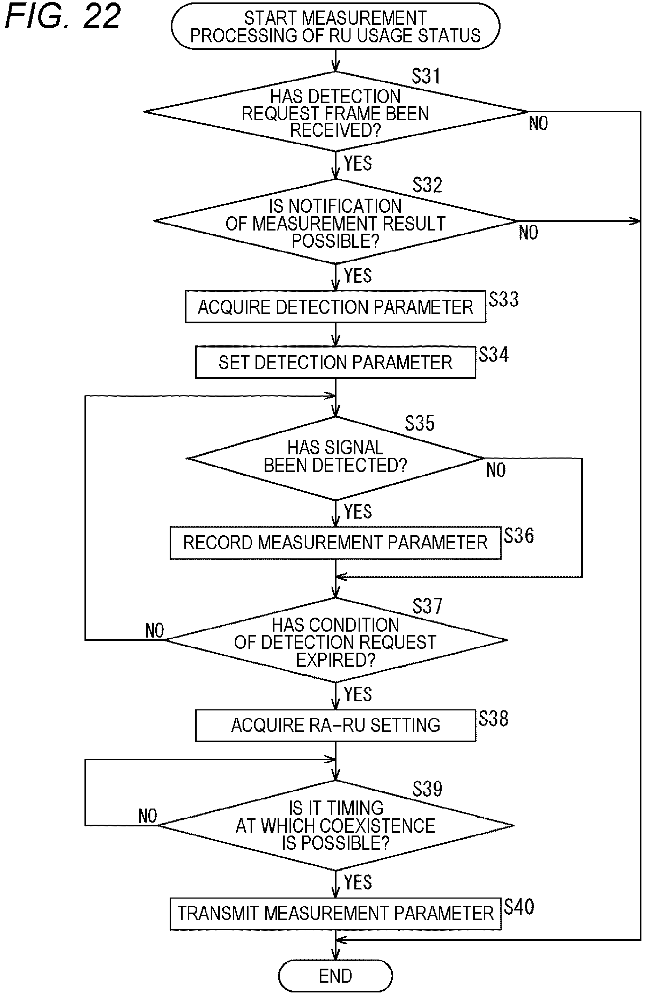

Fig. 22 is a flowchart illustrating measurement processing of a usage status of a frequency resource unit of an STA.

Note that the processing in Fig. 22 is processing performed by the communication control unit 104 of the STA controlling each unit of the wireless communication module 55.

In step S31, the communication control unit 104 of the STA determines whether or not a detection request frame transmitted from the AP has been received.

The AP transmits a detection request frame (timing t1 in Fig. 15). In a case where it is determined in step S31 that the detection request frame transmitted from the AP has been received, the processing step proceeds to step S32.

In step S32, the communication control unit 104 determines whether or not notification of a measurement result is possible. In a case where it is determined in step S32 that the notification of the measurement result is possible, the processing step proceeds to step S33.

In step S33, the communication control unit 104 acquires a detection parameter that is a parameter specifying how to detect a signal, from the detection request frame.

As described above, the detection request frame includes the detection parameter for detecting and measuring the signal transmitted by the FH communication device 12 existing in the surroundings.

In step S34, the communication control unit 104 sets the detection parameter to the RU unit signal detection unit 106.

In step S35, the communication control unit 104 determines whether or not the RU unit signal detection unit 106 has detected a signal from the FH communication device 12. The RU unit signal detection unit 106 detects the signal from the FH communication device 12 on the basis of the set detection parameter.

In a case where it is determined in step S35 that the signal from the FH communication device 12 has been detected, the processing step proceeds to step S36.

In step S36, the communication control unit 104 records the measurement parameter calculated on the basis of the result of measuring the signal from the FH communication device 12, the signal being detected by the RU unit signal detection unit 106.

In a case where it is determined in step S35 that the signal from the FH communication device 12 has not been detected, the processing in step S36 is skipped, and the processing step proceeds to step S37.

In step S37, the communication control unit 104 determines whether or not the condition of the detection request described in the detection request has expired, for example, in a case where a predetermined time has elapsed or in a case where a signal of a reference frequency has been detected a predetermined number of times. In a case where it is determined in step S37 that the condition of the detection request has not expired, the processing step returns to step S35, and the subsequent processing steps are repeated.

In a case where it is determined in step S37 that the condition of the detection request has expired, the processing step proceeds to step S38.

In step S38, the communication control unit 104 acquires the setting of the RA-RU described in the Trigger frame transmitted from the AP. On the basis of the RA-RU setting, the communication control unit 104 selects a parameter (for example, RA-RU, timing, and the like) that is not used by the FH communication device 12 detected by itself and can coexist.

In step S39, the communication control unit 104 waits until it is determined that it is a timing at which coexistence is possible. In a case where it is determined in step S39 that it is a timing at which coexistence is possible, the processing step proceeds to step S40.

In step S40, the communication control unit 104 transmits a detection report frame (FH System Detect Report Frame) including the measurement parameter to the AP. After step S40, the processing in Fig. 22 ends.

Furthermore, in a case where it is determined in step S31 that the communication control unit 104 of the STA has not received the detection request frame transmitted from the AP, or in a case where it is determined in step S32 that the communication control unit 104 cannot notify the measurement result, the processing in Fig. 22 ends.

### <Setting Processing of Frequency Resource Unit of DL OFDMA Communication of AP>

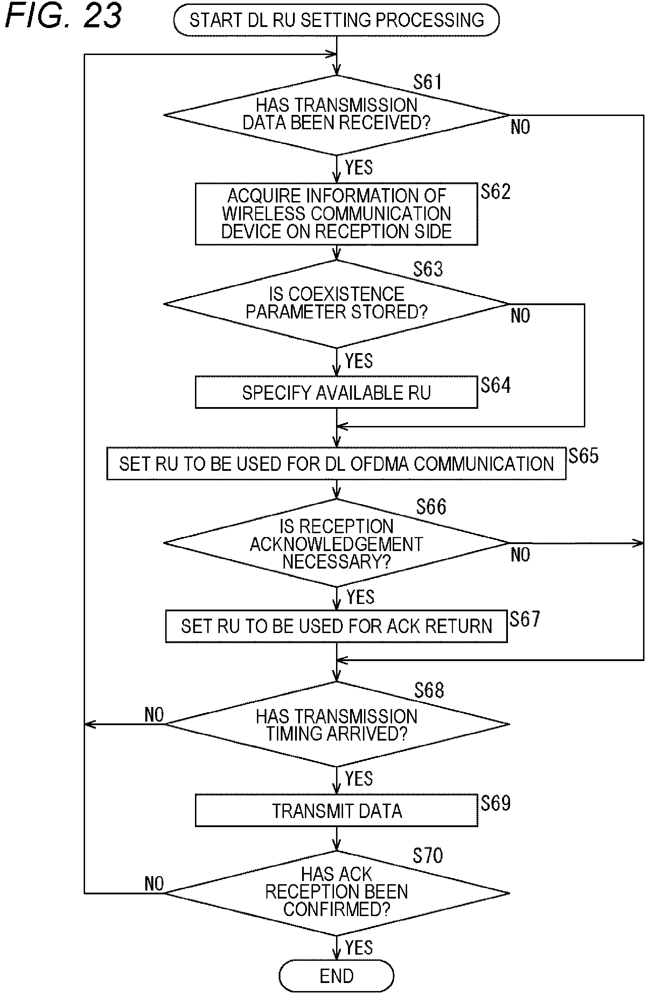

Fig. 23 is a flowchart illustrating setting processing of a frequency resource unit (DL RU) of DL OFDMA communication of the AP.

Fig. 23 illustrates processing in a case where DL data is transmitted from the AP to the STA. Note that, similarly to the processing in Fig. 20, the processing in Fig. 23 is processing performed by the communication control unit 104 of the AP controlling each unit of the wireless communication module 55.

In step S61, the communication control unit 104 determines whether or not transmission data has been received from the interface 101. In a case where it is determined in step S61 that the transmission data has been received from the interface 101, the processing step proceeds to step S62.

In step S62, the communication control unit 104 acquires information (address) of the STA, which is the wireless communication device 11 on the reception side.

In step S63, the communication control unit 104 determines whether or not the STA is already in a state in which the signal from the surrounding FH communication device 12 has been detected, that is, whether or not the coexistence parameters calculated from the measurement parameter transmitted from the specific STA, which is the reception side of the transmission data, is stored.

In a case where it is determined in step S63 that the coexistence parameters are stored, the processing step proceeds to step S64. In step S64, the communication control unit 104 specifies a frequency resource unit available on the basis of the frequency resource parameter among the coexistence parameters.

In a case where it is determined in step S63 that the coexistence parameters are not stored, the processing in step S64 is skipped, and the processing step proceeds to step S65.

In step S65, the communication control unit 104 sets a frequency resource unit available as a DL frequency resource unit (DL RU).

In step S66, the communication control unit 104 determines whether or not reception acknowledgement from the STA is necessary. In a case where it is determined in step S66 that the reception acknowledgement is necessary, the processing step proceeds to step S67.

In step S67, the communication control unit 104 sets a frequency resource unit available as a frequency resource unit (ACK RU) to be used for ACK return.

Furthermore, in a case where it is determined in step S61 that the transmission data has not been received, or in a case where it is determined in step S66 that the reception acknowledgment from the STA is not necessary, the processing step proceeds to step S68.

In step S68, the communication control unit 104 determines whether or not transmission timing has arrived. In a case where it is determined in step S68 that the transmission timing has arrived, the processing proceeds to step S69.

In step S69, the communication control unit 104 performs, for the STA, the DL OFDMA communication of the data frame in which information regarding the DL RU and the ACK RU is described as the Trigger parameter. The information regarding the DL RU includes information indicating a frequency resource unit available to the DL RU. The information regarding the ACK RU includes information indicating a frequency resource unit available to the ACK RU.

After receiving the data frame, the STA acquires information regarding the ACK RU from the Trigger parameter, and transmits the ACK using the frequency resource unit used for ACK return (timing t46 in Fig. 17) .

In step S70, the communication control unit 104 determines whether or not reception of the ACK has been confirmed. In a case where it is determined in step S70 that the reception of the ACK has been confirmed, the processing in Fig. 23 ends.

Furthermore, in a case where it is determined in step S68 that the transmission timing has not arrived, or in a case where it is determined in step S70 that the reception of the ACK has not been confirmed, the processing step returns to step S61, and the subsequent processing steps are repeated.

### <Setting Processing of Frequency Resource Unit of UL OFDMA Communication of STA>

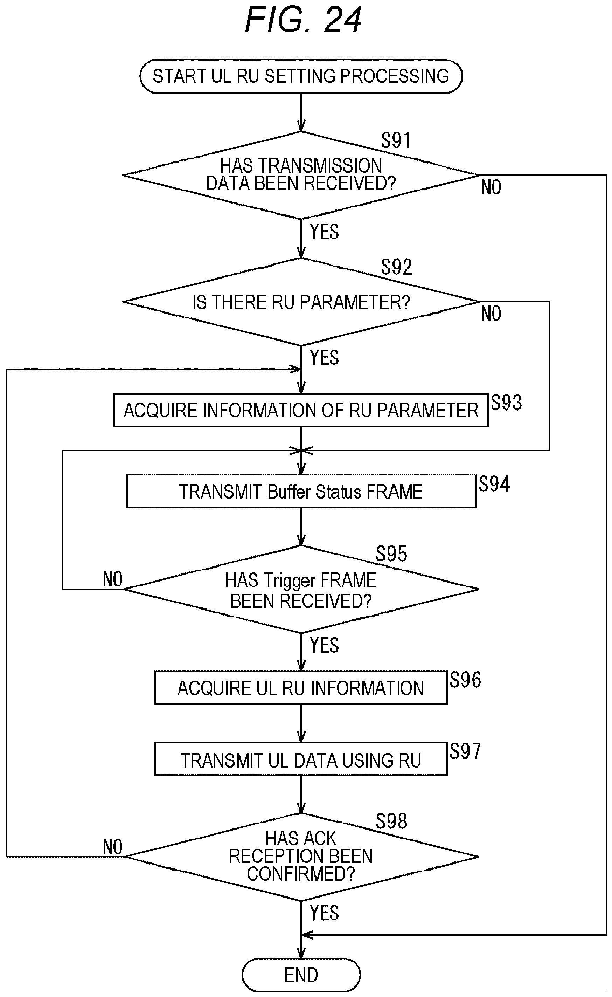

Fig. 24 is a flowchart illustrating setting processing of a frequency resource unit (UL-RU) of the UL OFDMA communication of the STA.

Fig. 24 illustrates processing in a case where UL data is transmitted from the STA to the AP. Note that the processing in Fig. 24 is processing performed by the communication control unit 104 of the STA controlling each unit of the wireless communication module 55.

In step S91, the communication control unit 104 determines whether or not transmission data has been received from the interface 101. In a case where it is determined in step S91 that the transmission data has been received from the interface 101, the processing step proceeds to step S92.

In step S92, the communication control unit 104 determines whether or not there is a parameter of the frequency resource unit (RU) used by the surrounding FH communication device 12 detected by itself. The frequency resource unit used in the surrounding FH communication device 12 is at least one frequency resource unit that includes a band overlapping with a band (channel) of a narrow-band signal, as described above. In a case where it is determined that there is a parameter of the frequency resource unit used in the FH communication device 12, the processing step proceeds to step S93.

In step S93, the communication control unit 104 acquires the parameter of the frequency resource unit stored as the measurement parameter in the memory or the like.

In step S94, the communication control unit 104 transmits, to the AP, a buffer status report (Buffer Status Report) describing that there is transmission data by using a frequency resource unit other than the frequency resource unit used in the surrounding FH communication device 12.

Note that, here, if the FH communication device 12 exists in the surroundings and none of the frequency resource units of the frequency band is available, the Buffer Status Report may be transmitted using the RA-RU set by the AP.

Furthermore, in the AP, a Trigger frame (UL DFDMA Data Trigger frame) for performing UL multiplex communication including the Buffer Status Report and information indicating frequency resource units available in the UL is generated and transmitted to the STA (timing t49 in Fig. 17).

In step S95, the communication control unit 104 determines whether or not the Trigger frame has been received. In a case where it is not determined in step S95 that the Trigger frame has been received, the processing step returns to step S94, and the subsequent processing steps are repeated.

In a case where it is determined in step S95 that the Trigger frame has been received, the processing step proceeds to step S96.

In step S96, the communication control unit 104 acquires information regarding the UL RU of the received Trigger frame.

In step S97, the communication control unit 104 transmits data by performing data transmission by the UL OFDMA communication using the UL RU indicated in the acquired information.

The ACK is transmitted from the AP that has received the data (timing t51 in Fig. 17).

In step S98, the communication control unit 104 determines whether or not reception of the ACK has been confirmed. In a case where it is determined in step S98 that the reception of the ACK has not been confirmed, the processing step returns to step S93, and the subsequent processing steps are repeated.

In a case where it is determined in step S98 that the reception of the ACK has been confirmed, the processing in Fig. 24 ends.

Furthermore, in a case where it is determined in step S91 that the transmission data has not been received, the processing in Fig. 24 ends.

### <<7. Modifications>>

In a case where the wireless communication device to which the present technology is applied supports both the FH communication system and the wireless LAN system inside the device (that is, both are operating), it is possible to divide the frequency resource units used in both the systems by designating the measurement parameter inside the device. The FH communication system supported inside the device is hereinafter referred to as an Inter FH communication system.

That is, in the above description, an example is illustrated in which the STA actually reports the frequency resource unit used in the surrounding FH communication system to the AP on the basis of the measurement result of the signal from the FH communication system.

Hereinafter, an example in which the STA sets a frequency resource unit to be used in the Inter FH communication system and reports the frequency resource unit to the AP will be described.

### <Frequency Resource Unit Setting Processing>

Fig. 25 is a flowchart illustrating setting processing of a frequency resource unit of the Inter FH communication system of the STA.

The processing in Fig. 25 is processing performed for the Inter FH communication system and the wireless LAN system to coexist in a predetermined frequency band. Note that the processing in Fig. 25 is processing performed by the communication control unit 104 of the STA controlling each unit of the wireless communication module 55.

In step S111, the communication control unit 104 determines whether or not the Inter FH communication system is operating inside its own device. In a case where it is determined in step Sill that the Inter FH communication system is operating inside the own device, the processing step proceeds to step S112.

In step S112, the communication control unit 104 calculates an estimation of the amount of frequency resource units necessary for use in the Inter FH communication system.

In step S113, the communication control unit 104 determines whether or not coexistence of the frequency resource unit with the wireless LAN system is necessary. In a case where it is determined in step S113 that the coexistence of the frequency resource unit with the wireless LAN system is necessary, the processing step proceeds to step S114.

In step S114, the communication control unit 104 waits until it is determined that the Trigger frame including RU Allocation information indicating the allocation status of the frequency resource units in the wireless LAN system has been received. The RU Allocation information may be, for example, RU Allocation information of OFDMA included in the Trigger frame from the AP.

In a case where it is determined in step S114 that the RU Allocation information has been received, the processing step proceeds to step S115.

In step S115, the communication control unit 104 acquires RU parameter information (setting of COEX RU or RA-RU) from the RU Allocation information.

In step S116, the communication control unit 104 determines whether or not there is setting of the COEX RU on the basis of the RU parameter information.

In a case where it is determined in step S116 that there is no setting of the COEX RU, the processing step proceeds to step S117.

In step S117, the communication control unit 104 sets the Inter Coexist flag illustrated in Fig. 12, for example, and sets a candidate of a coexistence resource unit (Inter FH COEX RU) scheduled to be used in the Inter FH communication system.

In step S118, the communication control unit 104 acquires the setting status of the RA-RU on the basis of the RU parameter information.

In step S119, the communication control unit 104 waits until the transmittable RU arrives on the basis of the setting status of the RA-RU. In a case where it is determined in step S119 that the transmittable RU has arrived, the processing step proceeds to step S120.

In step S120, the communication control unit 104 includes the RU parameter in which the candidate for the Inter FH COEX RU is set in a frame (for example, the detection report frame) and transmits the frame. Thereafter, the processing step returns to step S114 and the subsequent processing steps are repeated.

In a case where it is determined in step S116 that there is setting of the COEX RU, the processing step proceeds to step S121.

In step S121, the communication control unit 104 determines whether or not another FH communication device 12 is used. In a case where it is determined in step S121 that another FH communication device 12 is used, the processing step proceeds to step S117. That is, in this case, a candidate for the Inter FH COEX RU is additionally set in step S117.

In a case where it is determined in step S121 that another FH communication device 12 is not used, the processing step proceeds to step S122.

In step S122, the communication control unit 104 performs setting to use the set COEX RU as an Inter FH COEX RU. Thereafter, the processing in Fig. 25 ends.

Furthermore, in a case where it is determined in step Sill that the Inter FH communication system is not operating in the own device, or in a case where it is determined in step S113 that the coexistence of the frequency resource unit with the wireless LAN system is not necessary, the processing in Fig. 25 ends.

As described above, it is possible to ensure reliable use of the Inter FH communication system operating inside the device. Furthermore, RUs used by the respective communication systems can coexist in a predetermined frequency band to stably perform communication.

### <<8. Others>>

### <Effects>

As described above, in the present technology, in a frequency band operating as a wireless LAN system (first wireless communication system), a narrow-band signal of an FH communication system (second wireless communication system) that is a signal having a bandwidth narrower than the frequency band and different from the wireless LAN system is detected, and control is performed to transmit the wireless signal of the first wireless communication system while avoiding the first band in which the narrow-band signal is detected.

As a result, the transmission and reception of the narrow-band signal and the transmission and reception of the wireless LAN signal can coexist at a granularity in units of frequency resource units (2 MHz) in the same frequency band (20 MHz) as that of the FH communication system.

The wireless communication device (AP, STA) grasps the use of the frequency resource for each frequency resource unit, so that the wireless LAN system and the FH communication system can coexist even in the frequency band in which the FH communication system existing around the wireless communication device exists.

Furthermore, each STA reports, to the AP, the status of the frequency resource unit used by the surrounding FH communication system, so that the AP can optimize the setting of the frequency resource unit as necessary.

By the AP arranging RA-RUs used for OFDMA so as to be distributed in the frequency axis direction within a frequency band of a predetermined bandwidth, the STA can perform transmission to the AP using a frequency resource unit that does not interfere with communication of the FH communication system among the RA-RUs used for OFDMA.

By reporting a frequency resource unit that interferes with the FH communication system, information indicating a period, and the like to the AP, the STA can allocate a frequency resource unit that does not interfere with the FH communication system in each STA.

By the AP setting the COEX RU in advance for OFDMA, frequency resource units that are not constantly used in continuous communication can be generated. Therefore, these frequency resource units can also be used in the FH communication system, and frequency resources available in both sides are increased, so that coexistence becomes easier.

That is, In a case where the demand for data transmission is small in the wireless LAN system, it is possible to stably provide data transmission in the FH communication system by setting more COEX RUs.

On the other hand, in a case where the demand for data transmission in the wireless LAN system increases, in a case where it is necessary to perform communication requiring urgency, and in a case where data transmission requiring real-time property is performed, data transmission can be stably provided to the wireless LAN system by reducing the COEX RU.

As described above, according to the present technology, it is possible to perform signal transmission and reception of the wireless LAN while coexisting with communication using surrounding FH signals, and to operate while respecting mutual communication.

Note that, in the above description, the FH communication system has been described as an example of a wireless communication system that coexists with a wireless LAN system and uses a narrow-band signal. However, the present technology is not limited to the FH communication system, and can also be applied to a wireless communication system using a narrow-band signal.

Examples of the wireless communication system using a narrow-band signal include a communication system of the IEEE 802.11ah standard or a communication system such as ZigBee (registered trademark), Wi-SUN, LTE-M, or NB-IoT (Internet of Things). In these communication systems, a narrow-band signal having a bandwidth narrower than a frequency band operating as a wireless LAN system is used.

### <Configuration Example of Computer>

The series of processing steps described above can be executed by hardware and also can be executed by software. In a case where the series of processing steps is executed by software, a program included in the software is installed from a program recording medium on a computer incorporated in dedicated hardware, a general-purpose personal computer, or the like.

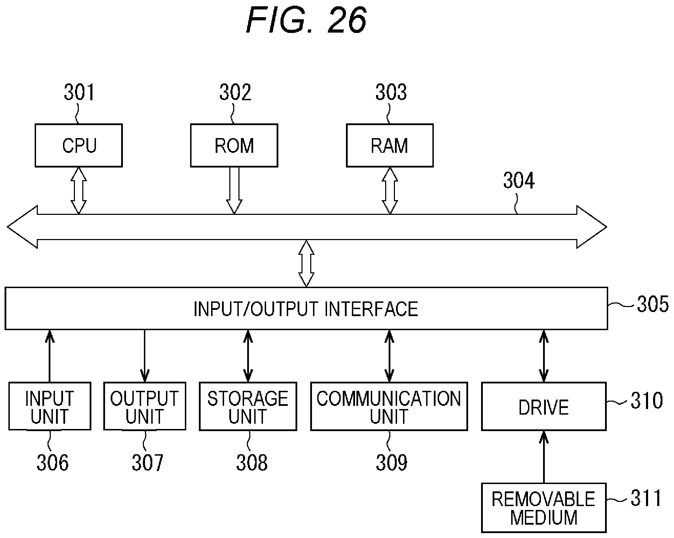

Fig. 26 is a block diagram illustrating a configuration example of the hardware of the computer that executes the above-described series of processes by the program.

A central processing unit (CPU) 301, a read only memory (ROM) 302, and a random access memory (RAM) 303 are connected to each other by a bus 304.

Moreover, to the bus 304, an input/output interface 305 is connected. To the input/output interface 305, an input unit 306 including a keyboard, a mouse, and the like, and an output unit 307 including a display, a speaker, and the like are connected. Furthermore, to the input/output interface 305, a storage unit 308 including a hard disk, a nonvolatile memory, and the like, a communication unit 309 including a network interface and the like, and a drive 310 that drives a removable medium 311 are connected.

In the computer configured as described above, the above-described series of processing steps is executed, for example, by the CPU 301 loading the program stored in the storage unit 308 into the RAM 303 via the input/output interface 305 and the bus 304 and executing the program.

The program to be executed by the CPU 301 is provided, for example, by being recorded on the removable medium 311 or via a wired or wireless transmission medium such as a local area network, the Internet, or digital broadcasting, and is installed on the storage unit 308.

Note that the program executed by the computer may be a program that executes processing in time series in the order described in the present specification, or a program that executes processing in parallel or at a necessary timing such as when a call is made.

### <Application Examples>

The present technology can be applied to various products. For example, the wireless communication device 11 in Fig. 5 may be implemented as a mobile terminal such as a smartphone, a tablet personal computer (PC), a notebook PC, a portable game terminal, or a digital camera, a fixed terminal such as a television receiver, a printer, a digital scanner, or a network storage, or an in-vehicle terminal such as a car navigation device. Furthermore, the wireless communication device 11 may be implemented as a machine to machine communication (M2M) terminal such as a smart meter, a vending machine, a remote monitoring device, or a point of sale (POS) terminal. Moreover, the wireless communication device 11 may be a wireless communication module (for example, an integrated circuit module configured with one die) mounted on these terminals.

On the other hand, for example, the wireless communication device 11 may be implemented as a wireless LAN AP (wireless base station) having a router function or not having a router function. Furthermore, the wireless communication device 11 may be implemented as a mobile wireless LAN router. Moreover, the wireless communication device 11 may be a wireless communication module (for example, an integrated circuit module configured with one die) mounted on these devices.

### <Configuration Example of Smartphone>

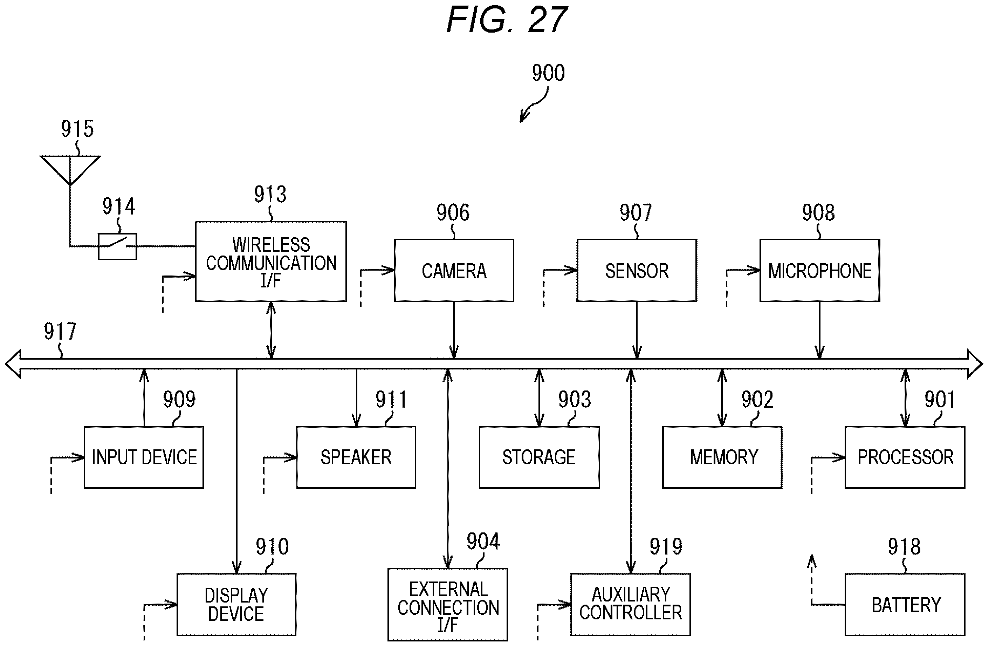

Fig. 27 is a block diagram illustrating a schematic configuration example of the smartphone to which the present technology is applied.

A smartphone 900 includes a processor 901, a memory 902, a storage 903, an external connection interface 904, a camera 906, a sensor 907, a microphone 908, an input device 909, and a display device 910. Furthermore, the smartphone 900 includes a speaker 911, a wireless communication interface 913, an antenna switch 914, an antenna 915, a bus 917, a battery 918, and an auxiliary controller 919.

The processor 901 may be, for example, a CPU or a system on chip (SoC), and restricts functions of an application layer and other layers of the smartphone 900.

The memory 902 includes a RAM and a ROM, and stores a program to be executed by the processor 901, and data.

The storage 903 may include a storage medium such as a semiconductor memory or a hard disk.

The external connection interface 904 is an interface for connecting an external device such as a memory card or a universal serial bus (USB) device to the smartphone 900.

The camera 906 includes an imaging element such as a charge coupled device (CCD) or a complementary metal oxide semiconductor (CMOS), for example, and generates a captured image.

The sensor 907 includes, for example, a sensor group including a positioning sensor, a gyro sensor, a geomagnetic sensor, and an acceleration sensor.

The microphone 908 converts audio input to the smartphone 900 into an audio signal.

The input device 909 includes, for example, a touch sensor that detects a touch on a screen of the display device 910, a keypad, a keyboard, a button, and a switch, and receives an operation by the user or information input from the user.

The display device 910 has a screen such as a liquid crystal display (LCD) or an organic light emitting diode (OLED) display, and converts the audio signal output from the smartphone 900 into audio.

The wireless communication interface 913 supports one or more of wireless LAN standards such as IEEE 802.11a, 11b, 11g, 11ac, and 11ad, and performs wireless communication.

The wireless communication interface 913 communicates with other devices via the wireless LAN AP in an infrastructure mode. Furthermore, the wireless communication interface 913 directly communicates with other devices in an ad hoc mode or a direct communication mode such as Wi-Fi Direct.

Note that, in Wi-Fi Direct, unlike the ad hoc mode, one of two terminals operates as an AP, but communication is directly performed between the terminals.

The wireless communication interface 913 typically includes a baseband processor, a radio frequency (RF) circuit, and a power amplifier. The wireless communication interface 913 may be a one-chip module in which a memory that stores a communication control program, a processor that executes the program, and related circuits are integrated.

In addition to the wireless LAN scheme, the wireless communication interface 913 may support other types of wireless communication schemes such as a short-range wireless communication scheme, a proximity wireless communication scheme, and a cellular communication scheme.

The antenna switch 914 switches a connection destination of the antenna 915 among a plurality of circuits (for example, circuits for different wireless communication schemes) included in the wireless communication interface 913.

The antenna 915 has a single or a plurality of antenna elements (for example, a plurality of the antenna elements forming a multiple input multiple output (MIMO) antenna), and is used for transmission and reception of a wireless signal by the wireless communication interface 913.

Note that the smartphone 900 is not limited to the example in Fig. 27, and may include a plurality of the antennas (for example, an antenna for the wireless LAN, an antenna of the proximity wireless communication scheme, and the like). In that case, the antenna switch 914 may be omitted from the configuration of the smartphone 900.

The bus 917 connects the processor 901, the memory 902, the storage 903, the external connection interface 904, the camera 906, the sensor 907, the microphone 908, the input device 909, the display device 910, the speaker 911, the wireless communication interface 913, and the auxiliary controller 919 to one another.

The battery 918 supplies power to each block of the smartphone 900 illustrated in Fig. 27 through a feed line partially indicated by a broken line in the drawing. The auxiliary controller 919 causes operation of minimum necessary functions of the smartphone 900, for example, in a sleep mode.

In the smartphone 900 illustrated in Fig. 27, the communication control unit 104 described above with reference to Fig. 6 may be implemented in the wireless communication interface 913. Furthermore, at least some of these functions may be implemented in the processor 901 or the auxiliary controller 919.

Note that the smartphone 900 may operate as a wireless AP (software AP) when the processor 901 executes an AP function at an application level. Furthermore, the wireless communication interface 913 may have the wireless AP function.

Moreover, the smartphone 900 may include a biometric authentication unit (fingerprint authentication, palm-shape authentication, voice authentication, blood vessel authentication, face authentication, iris authentication, and retina authentication). At that time, the wireless communication interface 913 in which the communication control unit 104 described above with reference to Fig. 6 is implemented is configured to receive power supply from the same battery 918 as at least one of the display device 910, the speaker 911, or the biometric authentication unit.

Furthermore, in the smartphone 900, information is displayed from at least one of the display device 910 or the speaker 911 on the basis of communication with an external device through the wireless communication interface 913. At that time, a result of synchronization according to the present technology may be output as information from at least one of the display device 910 or the speaker 911.

### <Configuration Example of In-vehicle Device>

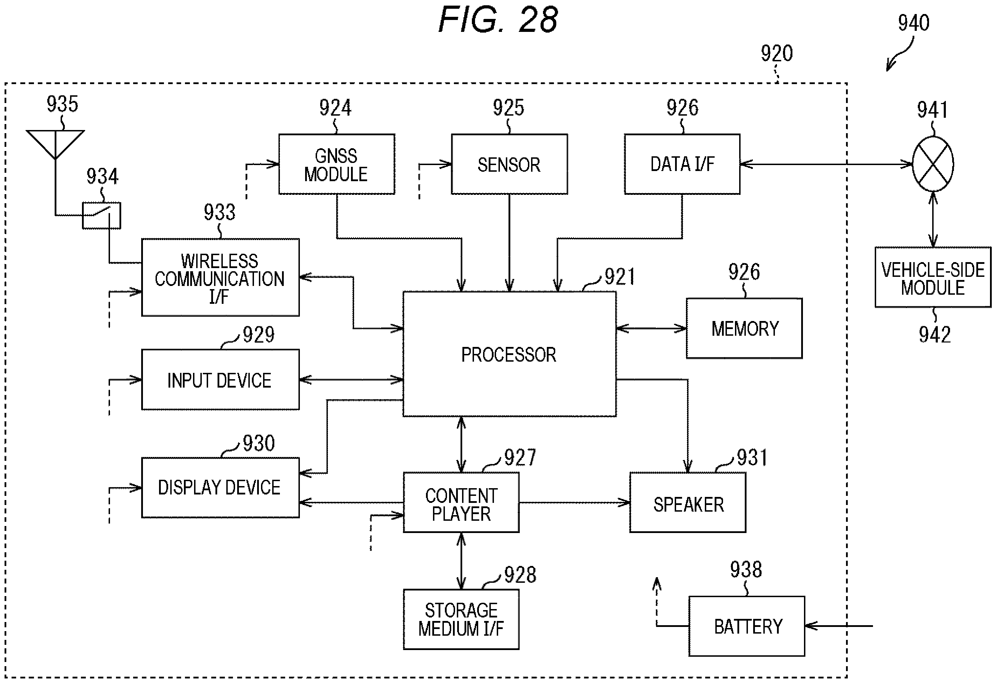

Fig. 28 is a block diagram illustrating a schematic configuration example of an in-vehicle device 920 to which the present technology is applied.

The in-vehicle device 920 includes a processor 921, a memory 922, a global navigation satellite system (GNSS) module 924, a sensor 925, a data interface 926, a content player 927, and a storage medium interface 928. Furthermore, the in-vehicle device 920 includes an input device 929, a display device 930, a speaker 931, a wireless communication interface 933, an antenna switch 934, an antenna 935, and a battery 938.

The processor 921 may be, for example, a CPU or an SoC, and controls a navigation function and other functions of the in-vehicle device 920. Furthermore, the processor 921 can also control a drive system of a vehicle, such as a brake, an accelerator, or a steering, on the basis of information obtained through communication based on the present technology.

The memory 922 includes a RAM and a ROM, and stores a program to be executed by the processor 921, and data.

The GNSS module 924 uses a GNSS signal received from a GNSS satellite to measure a location (for example, latitude, longitude, and altitude) of the in-vehicle device 920.

The sensor 925 includes, for example, a sensor group including a gyro sensor, a geomagnetic sensor, and an air pressure sensor.

The data interface 926 is connected to an in-vehicle network 941 via, for example, a terminal (not illustrated), and acquires data generated on the vehicle side, such as in-vehicle data.

The content player 927 reproduces contents stored in a storage medium (for example, a CD or a DVD) inserted into the storage medium interface 928.

The input device 929 includes, for example, a touch sensor that detects a touch on a screen of the display device 930, a button, a switch, or the like, and receives an operation by the user or information input from the user.

The display device 930 has a screen such as an LCD or an OLED display, and displays an image of a navigation function or contents to be reproduced.

The speaker 931 outputs sound of the navigation function or contents to be reproduced.

Note that, in the in-vehicle device 920, the navigation function and the function of the content player 927 are optional. The navigation function and the content player 927 may be removed from the configuration of the in-vehicle device 920.

The wireless communication interface 933 supports one or more of the wireless LAN standards such as IEEE 802.11a, 11b, 11g, 11n, 11ac, and 11ad, and performs wireless communication. The wireless communication interface 933 communicates with other devices via the wireless LAN AP in the infrastructure mode. Furthermore, the wireless communication interface 933 directly communicates with other devices in the ad hoc mode or the direct communication mode such as Wi-Fi Direct.

The wireless communication interface 933 typically includes a baseband processor, a RF circuit, and a power amplifier. The wireless communication interface 933 may be a one-chip module in which a memory that stores a communication control program, a processor that executes the program, or related circuits are integrated. In addition to the wireless LAN scheme, the wireless communication interface 933 may support other types of wireless communication schemes such as a short-range wireless communication scheme, a proximity wireless communication scheme, and a cellular communication scheme.

The antenna switch 934 switches a connection destination of the antenna 935 among a plurality of circuits included in the wireless communication interface 933.

The antenna 935 has a single or a plurality of antenna elements, and is used for transmission and reception of a wireless signal through the wireless communication interface 933.

Note that the in-vehicle device 920 is not limited to the example in Fig. 28, and may include a plurality of the antennas 935. In that case, the antenna switch 934 may be omitted from the configuration of the in-vehicle device 920.

In the in-vehicle device 920 illustrated in Fig. 28, the battery 938 may supply power through a feed line partially illustrated by a broken line in the drawing, and the communication control unit 104 described with reference to Fig. 6 may be mounted in the wireless communication interface 933. Furthermore, at least some of these functions may be implemented in the processor 921.

Furthermore, the wireless communication interface 933 may operate as the wireless communication device 11 described above and provide wireless connection to a terminal possessed by a user in the vehicle.

Furthermore, the present technology may be implemented as an in-vehicle system (or vehicle) 940 including one or more blocks of the in-vehicle device 920 described above, the in-vehicle network 941, and a vehicle-side module 942. The vehicle-side module 942 generates vehicle-side data such as a vehicle speed, an engine speed, or failure information, and outputs the generated data to the in-vehicle network 941.

### <Configuration Example of Wireless AP>

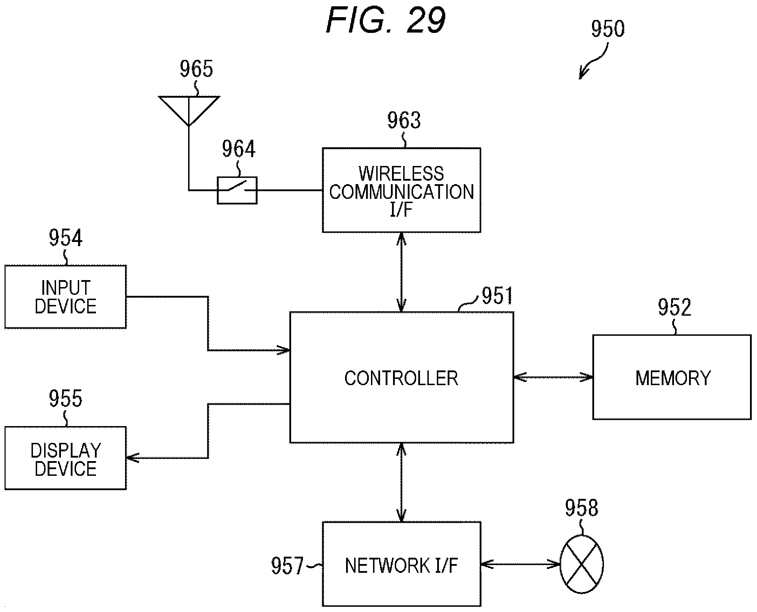

Fig. 29 is a block diagram illustrating a schematic configuration example of a wireless AP 950 to which the present technology is applied.

The wireless AP 950 includes a controller 951, a memory 952, an input device 954, a display device 955, a network interface 957, a wireless communication interface 963, an antenna switch 964, and an antenna 965.

The controller 951 may be, for example, a CPU or a digital signal processor (DSP), and operates various functions (for example, access restriction, routing, encryption, firewall, log management, and the like) of the Internet protocol (IP) layer and higher layer of the wireless AP 950.

The memory 952 includes a RAM and a ROM, and stores a program to be executed by the controller 951 and various control data (for example, a terminal list, a routing table, an encryption key, a security setting, a log, and the like).

The input device 954 includes, for example, a button and a switch, and receives an operation from the user.

The display device 955 includes an LED lamp and the like, and displays an operation status of the wireless AP 950.

The network interface 957 is a wired communication interface for connecting the wireless AP 950 to a wired communication network 958. The network interface 957 may have a plurality of connection terminals. The wired communication network 958 may be a LAN such as Ethernet (registered trademark), or may be a wide area network (WAN) .

The wireless communication interface 963 supports one or more of the wireless LAN standards such as IEEE 802.11a, 11b, 11g, 11n, 11ac, and 11ad, and provides wireless connection as an AP to a nearby terminal.

The wireless communication interface 963 typically includes a baseband processor, a RF circuit, and a power amplifier.

The wireless communication interface 963 may be a one-chip module in which a memory that stores a communication control program, a processor that executes the program, or related circuits are integrated.

The antenna switch 964 switches a connection destination of the antenna 965 among a plurality of circuits included in the wireless communication interface 963, and the antenna 965 has a single or a plurality of antenna elements and is used for transmission and reception of a wireless signal through the wireless communication interface 963.

In the wireless AP 950 illustrated in Fig. 29, the communication control unit 104 described with reference to Fig. 6 may be implemented in the wireless communication interface 963. Furthermore, at least some of these functions may be implemented in the controller 951.

Note that, the above-described embodiments describe an example for embodying the present technology, and there is a correspondence relationship between the matters in the embodiments and the matters specifying the invention in claims. Similarly, there is a correspondence relationship between the matters specifying the invention in claims and the matters in the embodiments of the present technology having the same names. However, the present technology is not limited to the embodiments, and can be embodied by applying various modifications to the embodiments without departing from the scope of the present technology.

Furthermore, the procedures described in the above-described embodiment may be considered as a method including a series of procedures and may be considered as a program for causing this computer to execute the series of procedures and a recording medium that stores the program.

As this recording medium, for example, a compact disc (CD), a MiniDisc (MD), a digital versatile disc (DVD), a memory card, a Blu-ray (registered trademark) Disc, and the like can be used.

Note that, in the present specification, a system means an assembly of a plurality of components (devices, modules (parts), and the like), and it does not matter whether or not all the components are located in the same housing. Therefore, a plurality of devices accommodated in separate housings and connected via a network and one device in which a plurality of modules is accommodated in one housing are both systems.

Furthermore, the effects described in the present specification are merely examples and not restrictive, and there may also be other effects.

An embodiment of the present technology is not limited to the embodiment described above, and various modifications can be made without departing from the scope of the present technology.

For example, the present technology may be configured as cloud computing in which one function is shared by a plurality of devices via a network and processed in cooperation.

Furthermore, each step described in the flowcharts described above may be executed by one device, or can be performed by a plurality of devices in a shared manner.

Moreover, in a case where a plurality of pieces of processing is included in one step, the plurality of pieces of processing included in the one step can be executed by one device or shared and executed by the plurality of the devices.

### <Examples of Configuration Combinations>

The present technology can also be configured as follows.
(1) A wireless communication control device, including:
   a detection unit that detects a narrow-band signal of a second wireless communication system in a frequency band in which a first wireless communication system operates, the narrow-band signal being a signal having a bandwidth narrower than the frequency band, the second wireless communication system being different from the first wireless communication system; and
   a communication control unit that performs control to transmit a wireless signal of the first wireless communication system while avoiding a first band in which the narrow-band signal is detected.
(2) The wireless communication control device according to (1), in which
   the second wireless communication system is a wireless communication system using frequency hopping.
(3) The wireless communication control device according to (1) or (2), further including
   a prediction unit that predicts a second time in which the narrow-band signal can be detected after a first time on the basis of the first time in which the narrow-band signal is detected,
   in which the narrow-band signal is a frequency hopping signal, and
   the communication control unit performs control to transmit the wireless signal while avoiding the second time.
(4) The wireless communication control device according to any one of (1) to (3), in which
   the first band is one of a plurality of frequency resource units included in the frequency band, and
   the detection unit detects, among the frequency resource units, the narrow-band signal by setting at least one of the frequency resource units including a band overlapping with a band of the narrow-band signal as a detection target.
(5) The wireless communication control device according to (4), further including
   a measurement unit that measures the narrow-band signal detected by the detection unit,
   in which the communication control unit performs control to transmit a measurement parameter obtained on the basis of a measurement result by the measurement unit to a wireless communication device.
(6) The wireless communication control device according to any one of (1) to (5), in which
   the first wireless communication system is a wireless LAN system.
(7) The wireless communication control device according to any one of (1) to (6), in which
   the second wireless communication system is a Bluetooth (registered trademark) system.
(8) The wireless communication control device according to any one of (5) to (7), in which
   the communication control unit performs control to transmit the wireless signal by using the frequency resource unit that does not include the first band in which the narrow-band signal is detected among the frequency resource units capable of transmitting the wireless signal to the wireless communication device.
(9) The wireless communication control device according to any one of (5) to (8), in which
   the communication control unit performs control to transmit the wireless signal while avoiding the first band in which the narrow-band signal is detected on the basis of one or a plurality of random access units set as the frequency resource units that can be randomly accessed by the wireless communication device and the measurement parameter.
(10) The wireless communication control device according to any one of (5) to (9), in which
   the communication control unit performs control to transmit the wireless signal by using a use resource unit that is the frequency resource unit used for wireless communication, the use resource unit being set for each device by the wireless communication device on the basis of the measurement parameter.
(11) The wireless communication control device according to (10), in which
   the use resource unit is respectively set for use in at least one of multi-user multiplexing communication or transmission of a block ACK response frame.
(12) The wireless communication control device according to any one of (5) to (11), in which
   the communication control unit performs control to transmit the wireless signal by using the frequency resource unit other than a coexistence resource unit that is the frequency resource unit for coexistence with the second wireless communication system in the frequency band set by the wireless communication device on the basis of a usage status of the frequency resource unit.
(13) The wireless communication control device according to any one of (5) to (12), in which
   the communication control unit performs control to set an Inter coexistence resource unit and transmit the measurement parameter including information regarding the Inter coexistence resource unit to the wireless communication device, the Inter coexistence resource unit being the frequency resource unit used in an Inter FH communication system operating in its own device.
(14) The wireless communication control device according to any one of (5) to (13), in which
   the communication control unit performs control to transmit the measurement parameter to the wireless communication device in a case where there is a change in the measurement parameter of the narrow-band signal.
(15) The wireless communication control device according to any one of (5) to (14), in which
   the communication control unit performs control to transmit the measurement parameter to the wireless communication device in a case of receiving a detection request frame of the narrow-band signal from the wireless communication device.
(16) The wireless communication control device according to any one of (5) to (15), in which
   the communication control unit performs control to transmit the measurement parameter to the wireless communication device in a case where the narrow-band signal is detected a predetermined number of times.
(17) The wireless communication control device according to any one of (5) to (16), in which
   the measurement parameter includes at least information regarding a bandwidth of the first band in which the narrow-band signal is detected and the frequency resource unit.
(18) The wireless communication control device according to any one of (5) to (17), in which
   the second wireless communication system is a frequency hopping communication system, an IEEE 802.11ah standard communication system, or a communication system such as ZigBee (registered trademark), Wi-SUN, LTE-M, or NB-IoT (Internet of Things).
(19) The wireless communication control device according to any one of (5) to (18), in which
   the measurement unit measures the detected narrow-band signal until a predetermined measurement time elapses.
(20) The wireless communication control device according to any one of (5) to (19), in which
   the measurement unit measures the detected narrow-band signal in a case where a signal exceeding a predetermined reception field strength is detected.
(21) The wireless communication control device according to any one of (5) to (20), in which
   the measurement unit detects the narrow-band signal by setting the frequency resource unit as a detection target within the frequency band of a designated bandwidth.
(22) The wireless communication control device according to any one of (5) to (21), in which
   the measurement unit specifies a period in which the narrow-band signal appears on the basis of the detected narrow-band signal.
(23) A wireless communication control method including:
   by a wireless communication control device,
   detecting a narrow-band signal of a second wireless communication system in a frequency band in which a first wireless communication system operates, the narrow-band signal being a signal having a bandwidth narrower than the frequency band, the second wireless communication system being different from the first wireless communication system; and
   performing control to transmit a wireless signal of the first wireless communication system while avoiding a first band in which the narrow-band signal is detected.
(24) A program for causing a computer to function as:
   a detection unit that detects a narrow-band signal of a second wireless communication system in a frequency band in which a first wireless communication system operates, the narrow-band signal being a signal having a bandwidth narrower than the frequency band, the second wireless communication system being different from the first wireless communication system; and
   a communication control unit that performs control to transmit a wireless signal of the first wireless communication system while avoiding a first band in which the narrow-band signal is detected.
(25) A wireless communication control device including:
   a reception unit that receives a measurement parameter obtained from a measurement result obtained by measuring a narrow-band signal of a second wireless communication system with a wireless communication device in a frequency band in which a first wireless communication system operates, the narrow-band signal being a signal having a bandwidth narrower than the frequency band detected in a plurality of frequency resource units included in the frequency band, the second wireless communication system being different from the first wireless communication system;
   a communication control unit that sets a use resource unit for the wireless communication devices on the basis of the measurement parameter, the use resource unit being the frequency resource unit used for wireless communication; and
   a transmission unit that transmits a frame including information regarding the use resource unit to the wireless communication device.
(26) The wireless communication control device according to (25), in which
   the second wireless communication system is a wireless system using frequency hopping.
(27) The wireless communication control device according to (25) or (26), in which
   the narrow-band signal is a frequency hopping signal.
(28) The wireless communication control device according to any one of (25) to (27), in which
   the first wireless communication system is a wireless LAN system.
(29) The wireless communication control device according to any one of (25) to (28), in which
   the second wireless communication system is a Bluetooth system.
(30) The wireless communication control device according to any one of (25) to (29), in which
   the communication control unit transmits a detection request frame for detecting the narrow-band signal in the frequency resource unit to the wireless communication device within the frequency band that is likely to be used by the second wireless communication system.
(31) The wireless communication control device according to (30), in which
   the wireless communication device includes a first wireless communication device and a second wireless communication device, and
   the communication control unit transmits the detection request frame to the second wireless communication device in a case of receiving the measurement parameter transmitted from the first wireless communication device in a case where there is a change in the measurement parameter of the narrow-band signal.
(32) The wireless communication control device according to any one of (25) to (31), in which
   the communication control unit sets a plurality of random access resource units that can be randomly accessed by the wireless communication device.
(33) The wireless communication control device according to any one of (25) to (32), in which
   the communication control unit sets a coexistence resource unit that is the frequency resource unit to coexist with the second wireless communication system in the frequency band on the basis of the measurement parameter.
(34) The wireless communication control device according to any one of (25) to (33), further including
   a measurement unit that outputs an own measurement result obtained by measuring the narrow-band signal with the own measurement unit,
   in which the communication control unit sets the use resource unit for the other wireless communication device on the basis of the own measurement result and the measurement parameter.
(35) The wireless communication control device according to any one of (25) to (34), in which
   the measurement parameter includes information regarding a bandwidth in which the narrow-band signal is detected, the frequency resource unit, and a power value.
(36) The wireless communication control device according to any one of (25) to (35), in which
   the second wireless communication system is a frequency hopping communication system, an IEEE 802.11ah standard communication system, or a communication system such as ZigBee (registered trademark), Wi-SUN, LTE-M, or NB-IoT (Internet of Things).
(37) A wireless communication control method including:
   by a wireless communication control device,
   receiving a measurement parameter obtained from a measurement result obtained by measuring a narrow-band signal of a second wireless communication system with a wireless communication device in a frequency band in which a first wireless communication system operates, the narrow-band signal being a signal having a bandwidth narrower than the frequency band detected in a plurality of frequency resource units included in the frequency band, the second wireless communication system being different from the first wireless communication system;
   setting a use resource unit for each of the wireless communication devices on the basis of the measurement parameter, the use resource unit being the frequency resource unit used for wireless communication; and
   transmitting a frame including information regarding the use resource unit to the wireless communication device.
(38) A program for causing a computer to function as:
   a reception unit that receives a measurement parameter obtained from a measurement result obtained by measuring a narrow-band signal of a second wireless communication system with a wireless communication device in a frequency band in which a first wireless communication system operates, the narrow-band signal being a signal having a bandwidth narrower than the frequency band detected in a plurality of frequency resource units included in the frequency band, the second wireless communication system being different from the first wireless communication system;
   a communication control unit that sets a use resource unit for each of the wireless communication devices on the basis of the measurement parameter, the use resource unit being the frequency resource unit used for wireless communication; and
   a transmission unit that transmits a frame including information regarding the use resource unit to the wireless communication device.

### REFERENCE SIGNS LIST

- 11, 11-1 and 11-2: Wireless communication device
- 12-1 and 12-2: FH communication device
- 51: Internet connection module
- 52: Information input module
- 53: Device control module
- 54: Information output module
- 55: Wireless communication module
- 101: Interface
- 102: Transmission buffer
- 103: Frame construction unit
- 104: Communication control unit
- 105: Signal transmission processing unit
- 106: RU unit signal detection unit
- 107: High frequency processing unit
- 108, 108-1 and 108-2: Antenna
- 109: Signal reception processing unit
- 110: Frame analysis unit
- 111: Reception buffer

## Claims

1. A wireless communication control device comprising:
a detection unit that detects a narrow-band signal of a second wireless communication system in a frequency band in which a first wireless communication system operates, the narrow-band signal being a signal having a bandwidth narrower than the frequency band, the second wireless communication system being different from the first wireless communication system; and
a communication control unit that performs control to transmit a wireless signal of the first wireless communication system while avoiding a first band in which the narrow-band signal is detected.

2. The wireless communication control device according to claim 1, wherein
the second wireless communication system is a wireless communication system using frequency hopping.

3. The wireless communication control device according to claim 2, further comprising
a prediction unit that predicts a second time in which the narrow-band signal can be detected after a first time on a basis of the first time in which the narrow-band signal is detected,
wherein the narrow-band signal is a frequency hopping signal, and
the communication control unit performs control to transmit the wireless signal while avoiding the second time.

4. The wireless communication control device according to claim 3, wherein
the first band is one of a plurality of frequency resource units included in the frequency band, and
the detection unit detects, among the frequency resource units, the narrow-band signal by setting at least one of the frequency resource units including a band overlapping with a band of the narrow-band signal as a detection target.

5. The wireless communication control device according to claim 4, further comprising
a measurement unit that measures the narrow-band signal detected by the detection unit,
wherein the communication control unit performs control to transmit a measurement parameter obtained on a basis of a measurement result by the measurement unit to a wireless communication device.

6. The wireless communication control device according to claim 5, wherein
the first wireless communication system is a wireless LAN system.

7. The wireless communication control device according to claim 6, wherein
the second wireless communication system is a Bluetooth system.

8. The wireless communication control device according to claim 5, wherein
the communication control unit performs control to transmit the wireless signal by using the frequency resource unit that does not include the first band in which the narrow-band signal is detected among the frequency resource units capable of transmitting the wireless signal to the wireless communication device.

9. The wireless communication control device according to claim 5, wherein
the communication control unit performs control to transmit the wireless signal while avoiding the first band in which the narrow-band signal is detected on a basis of one or a plurality of random access units set as the frequency resource units that can be randomly accessed by the wireless communication device and the measurement parameter.

10. The wireless communication control device according to claim 5, wherein
the communication control unit performs control to transmit the wireless signal by using a use resource unit that is the frequency resource unit used for wireless communication, the use resource unit being set for each device by the wireless communication device on a basis of the measurement parameter.

11. The wireless communication control device according to claim 10, wherein
the use resource unit is respectively set for use in at least one of multi-user multiplexing communication or transmission of a block ACK response frame.

12. The wireless communication control device according to claim 5, wherein
the communication control unit performs control to transmit the wireless signal by using the frequency resource unit other than a coexistence resource unit that is the frequency resource unit for coexistence with the second wireless communication system in the frequency band set by the wireless communication device on a basis of a usage status of the frequency resource unit.

13. The wireless communication control device according to claim 5, wherein
the communication control unit performs control to set an Inter coexistence resource unit and transmit the measurement parameter including information regarding the Inter coexistence resource unit to the wireless communication device, the Inter coexistence resource unit being the frequency resource unit used in an Inter FH communication system operating in its own device.

14. The wireless communication control device according to claim 5, wherein
the communication control unit performs control to transmit the measurement parameter to the wireless communication device in a case where there is a change in the measurement parameter of the narrow-band signal.

15. The wireless communication control device according to claim 5, wherein
the communication control unit performs control to transmit the measurement parameter to the wireless communication device in a case of receiving a detection request frame of the narrow-band signal from the wireless communication device.

16. The wireless communication control device according to claim 5, wherein
the communication control unit performs control to transmit the measurement parameter to the wireless communication device in a case where the narrow-band signal is detected a predetermined number of times.

17. The wireless communication control device according to claim 5, wherein
the measurement parameter includes at least information regarding a bandwidth of the first band in which the narrow-band signal is detected and the frequency resource unit.

18. The wireless communication control device according to claim 1, wherein
the second wireless communication system is a frequency hopping communication system, an IEEE 802.11ah standard communication system, or a communication system such as ZigBee (registered trademark), Wi-SUN, LTE-M, or NB-IoT (Internet of Things).

19. A wireless communication control method comprising:
by a wireless communication control device,
detecting a narrow-band signal of a second wireless communication system in a frequency band in which a first wireless communication system operates, the narrow-band signal being a signal having a bandwidth narrower than the frequency band, the second wireless communication system being different from the first wireless communication system; and
performing control to transmit a wireless signal of the first wireless communication system while avoiding a first band in which the narrow-band signal is detected.

20. A program for causing a computer to function as:
a detection unit that detects a narrow-band signal of a second wireless communication system in a frequency band in which a first wireless communication system operates, the narrow-band signal being a signal having a bandwidth narrower than the frequency band, the second wireless communication system being different from the first wireless communication system; and
a communication control unit that performs control to transmit a wireless signal of the first wireless communication system while avoiding a first band in which the narrow-band signal is detected.
